# EUROPEAN PATENT SPECIFICATION

(11) **EP 3 353 089 B1**
(45) Date of publication and mention of the grant of the patent: **07.06.2023**
(21) Application number: 16791678.2
(22) Date of filing: 20.09.2016
(51) Int. Cl.: B65D 77/06, B65D 81/20, B65D 88/16, B65D 88/74, A23F 5/10, B65B 1/04, B65B 25/00, B65B 29/00, B65B 31/00, B65B 31/04, B65D 77/22

(54) **PACKAGING ASSEMBLY FOR THE TRANSPORT AND STORING OF ROASTED COFFEE AND METHOD FOR PACKAGING ROASTED COFFEE BEANS**
VERPACKUNGSANORDNUNG FÜR TRANSPORT UND LAGERUNG VON RÖSTKAFFEE UND VERFAHREN ZUM VERPACKEN VON GERÖSTETEN KAFFEEBOHNEN
ENSEMBLE EMBALLAGE POUR LE TRANSPORT ET LE STOCKAGE DE CAFÉ TORRÉFIÉ ET PROCÉDÉ DE CONDITIONNEMENT POUR DES GRAINS DE CAFÉ TORRÉFIÉS

(30) Priority: 21.09.2015 IT UB20153754; 25.03.2016 IT UB20152033
(43) Date of publication of application: 01.08.2018
(73) Proprietor: Illycaffe' S.p.A., 34147 Trieste (IT)
(72) Inventor: BRUSSA, David, I-34147 Trieste (IT); SAVONITTI, Oriana, I-34147 Trieste (IT); LODATO, Alessandra, I-34147 Trieste (IT); MAZZON, Barbara, I-34147 Trieste (IT)
(74) Representative: Crippa, Paolo Ernesto
(86) International application number: PCT/IB2016/055609
(87) International publication number: WO 2017/051314

(56) References cited:
- WO-A1-2014/147159
- WO-A1-2014/147159
- WO-A1-2014/147159
- DE-T2- 60 026 712
- DE-T2- 60 026 712
- DE-T2- 60 026 712
- GB-A- 2 390 355
- GB-A- 2 390 355
- GB-A- 2 390 355
- US-A1- 2014 097 118
- US-A1- 2014 097 118
- US-A1- 2014 097 118

## Description

### Field of application

This invention relates to a packaging assembly for the transport and/or storing of roasted coffee and a method of filling and transport of said assembly. According to an embodiment, said roasted coffee is in the form of beans.

In particular, this invention relates to an assembly for the packaging of large amounts of roasted coffee so that it can also be transported over long distances in long periods of time and possibly stored or warehoused.

### State of the art

As is well known, to preserve the coffee in the best conditions, in particular that already roasted, it is necessary to isolate it from the outside environment, preventing air from entering into contact with the coffee, preventing large amounts of oxygen and humidity from coming into contact with the oils present in coffee after its roasting.

In fact, preventing the oxidation of the oils present in roasted coffee avoids its being rancid and, in this way, allows the preservation of the aromas and flavours of freshly roasted coffee.

Equally important is preventing contact of the roasted coffee with moisture in the air that can trigger processes of rancidity with very high potential negative effect on the organoleptic characteristics of the coffee.

Roasted coffee can be preserved by enclosing it in sacks under vacuum or otherwise sealed. However, these known sacks, usually small (a few tens of doses) and these known methods, do not allow the storage of large amounts of coffee, especially in security, where it is decided to store these packages in the warehouse or transport them with long transport and storage times.

Therefore, small sacks are known for the storage of roasted coffee in the form of beans or ground. However, these known solutions are unsuitable for transporting coffee to great distances, or to warehouse it for long periods, particularly in large quantities for possible subsequent industrial processing.

Documents US6213645, US6602590, JPH10167335, and GB552804 show of sack solutions of this type.

However, the roasted coffee contains gases that develop during its roasting, in particular carbon dioxide, which is slowly released from the roasted bean in the 2-15 days after roasting. Consequently, after the packing and sealing of the sack, the internal pressure is increased due to the emission of gas contained in the coffee.

To eliminate this drawback, sacks are known fitted with unidirectional valves that discharge part of the gas present in the head space of the sack into the external environment, reducing the pressure inside the sack as soon as it is formed.

A valve solution that prevents the formation of over-pressure inside the sack is for example known from document GB1204462 which shows a unidirectional valve applicable to an opening of the sack so as to allow the immediate outflow of gas upon the creation of over-pressure inside, but at the same time preventing the access of air inside the sack and preventing it from coming into contact with the coffee.

This need is particularly felt when one wishes to transport or store for long periods, large quantities of coffee that release large amounts of gas that are difficult to regulate. Therefore, in the past, it was always preferable to transport raw, or green, coffee beans and proceed to its roasting only upon arrival in the vicinity of the area of its use and at the time of the further processing of the coffee bean.

However, the coffee roasting process is strongly influenced by the environmental conditions of the roasting plant which therefore does not allows replicating the aromas and flavours in an environment that lacks the ideal conditions.

Documents US4365715, US6663284, US7588160, KR101004262 and WO2011030244, show solutions of sacks fitted with unidirectional valves suitable for the conservation of small quantities of coffee. However, all these solutions show sacks capable of receiving small quantities that release small quantities of gas and therefore easily controllable.

In particular US2014097118 shows a first sack of modest capacity and provided with a unidirectional valve for degassing its contents in the event of over-pressure. A plurality of these first small sacks is received in a second flexible sack also provided with a unidirectional valve. The two valves are calibrated so as to maintain the internal pressure of the second sack not less than the working pressure of the first. The second sack is placed in a rigid container, for example of corrugated cardboard.

This known solution is extremely complex to implement especially if one wishes to transport or store a large quantity of already roasted coffee while avoiding the use of many small containers.

A further known solution of this type that however has the same disadvantages is known from GB2390355-A.

State of the art systems are also known for transporting large quantities of roasted coffee in single polypropylene sacks, which have no barrier against air and humidity, exposing the coffee to rancidity.

Also known is the use of polylaminate sacks for the transport of large quantities of food products such as cereals, nuts and coffee. These systems have the limitation of adaptation to secure transport, exposing the sacks to accidental breakage during their transport and handling. In fact, these sacks are easily torn even by small impacts with bodies that are not necessarily blunt.

There is therefore the need to simplify the packaging of large quantities of roasted coffee beans in order to avoid both the oxidation of the oils present in the roasted coffee and, at the same time, avoid the formation of an excessive over-pressure inside the container as well as, at the same time, allowing large warehousing capacity in a single container, without resorting to a plurality of small expensive packages of complex construction for the transport of already roasted beans, small packages that are suitable for direct sale to the public, and not for subsequent processing.

There is therefore the need to simplify the packaging of large quantities of roasted and ground coffee beans in order to avoid both the oxidation of the oils present in the roasted coffee and, at the same time, avoid the formation of a depression inside the container as well as, at the same time, allowing large warehousing capacity in a single container, without resorting to a plurality of small expensive packages of complex construction for the transport of already roasted beans, small packages that are suitable for direct sale to the public, and not for subsequent processing, as we wish to allowing doing with this solution.

There is also a strongly felt need to store large quantities of roasted coffee (both in beans and ground) before sending it to various further processing and packaging, so as to have a warehouse of semi-finished product that can respond promptly to a sudden request for subsequent processing phases, avoiding having to wait long times for roasting and, perhaps, even grinding, especially, although not necessarily, where the roasting, grinding and especially of further processing and packaging plants are located in different locations.

### Solution

Therefore, the purpose of this invention is to provide a packaging assembly for the storage and/or transport of roasted coffee, as well as a method of filling, storing and transporting said assembly that is able to satisfy the above-listed needs and solve the problems of the prior art.

These and other purposes are achieved by means of an assembly according to claim 1, a method according to claim 8. Several advantageous embodiments are covered by the dependent claims.

Thanks to the embodiments described in the claims, it is possible to provide a packaging assembly of large, suitable also for industrial uses. In particular, the proposed solution allows avoiding the oxidation of the oils present in roasted coffee, allowing storage times up to 90 days and beyond, and thus safeguarding the fragrance, aromas and flavours of freshly roasted coffee. At the same time, there is excellent moisture resistance.

Thanks to the proposed solutions, it is also possible to avoid the formation of excessive over-pressures in the assembly even if there are large quantities of roasted coffee in a single volume that releases large quantities of gas.

Thanks to the suggested embodiments, it is possible to protect the assembly from accidental breakage, facilitating and, above all, simplifying the handling of the packaging during loading, unloading and storage.

In particular, thanks to the embodiments described, it is possible to facilitate and especially to simplify the operations of loading roasted coffee and unloading it at the destination in the processing plants, perhaps thousands of kilometres away, and after several tens of days. Furthermore, the embodiments described allow for a simple check of the proper state of the coffee even after its packaging or even shortly before its unloading to determine in time whether to mix the contents of one assembly with others.

Thanks to the embodiments described, it is possible to obtain an assembly with high structural stability suitable for the transport and/or storage of a large, heavy assembly.

### Figures

Further characteristics and advantages of the assembly according to the invention will appear in the following description of its preferred embodiments, provided by way of non-limiting example, with reference to the annexed figures, in which:

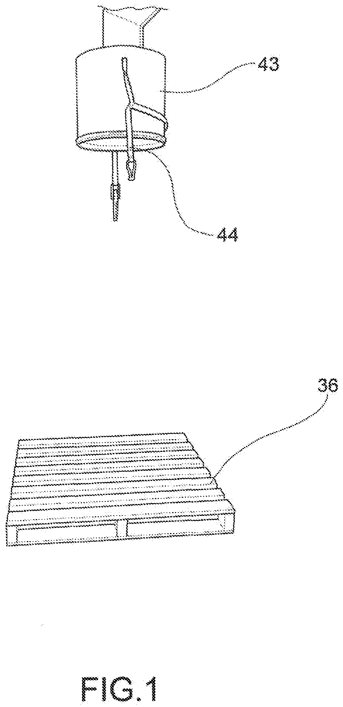

- Figure 1 is an axonometric view of a transport pallet placed below a hopper for loading coffee beans to which is bound a locking strap of an impermeable bag;

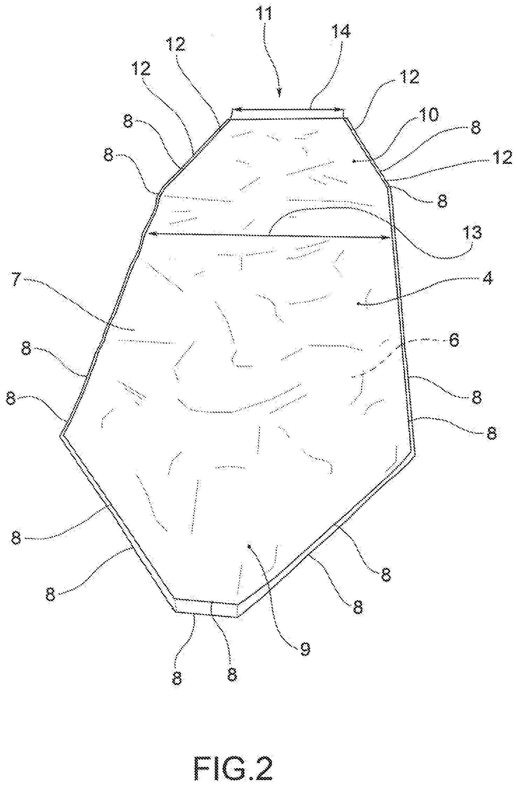

- Figure 2 shows an axonometric view of a die-cut impermeable bag in a position in which the die-cut flaps are folded in a flat position, from which you can see the shape of the conical mouth portion with linear trend walls;

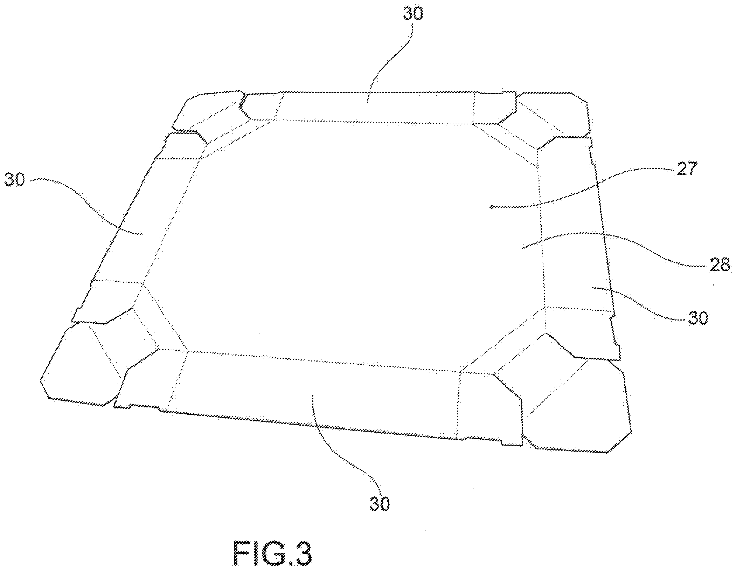

- Figure 3 shows a perspective view of the bottom of a self-supporting, octabin type, container, die-cut and opened in a flat extended position;

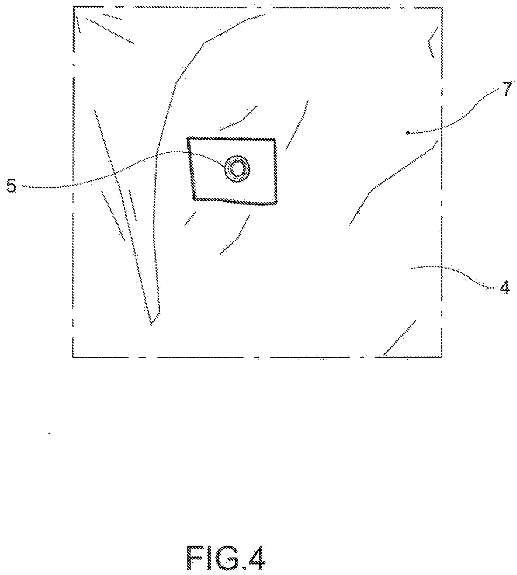

- Figure 4 is a perspective view of a detail of the side wall portion of impermeable bag impermeable to which is associated a unidirectional valve that allows the escape of gas from the inner volume of the impermeable bag, preventing the entry of pollutants and outside air inside the impermeable bag;

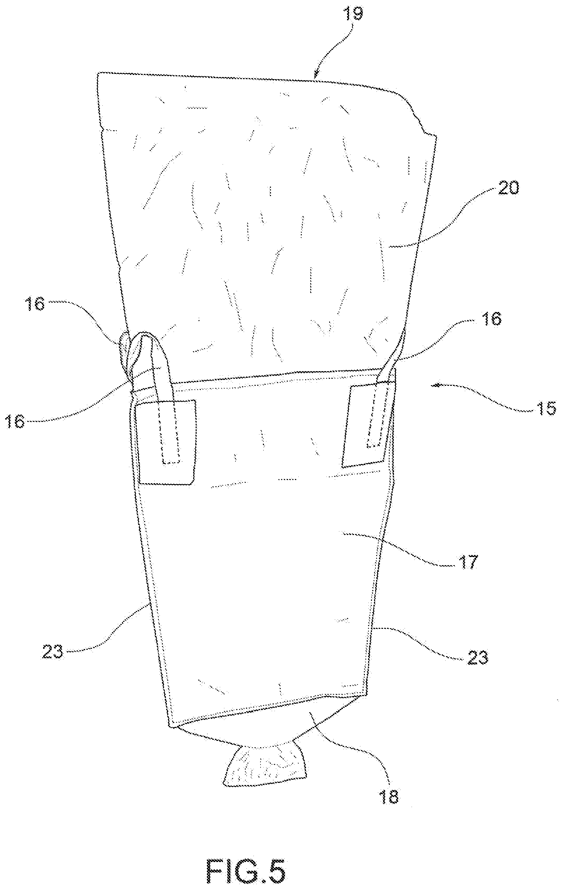

- Figure 5 is a perspective view of a flexible protection and transport sack suitable to be fitted on an impermeable bag with die-cut structure, here in the collection position and lying on a plane;

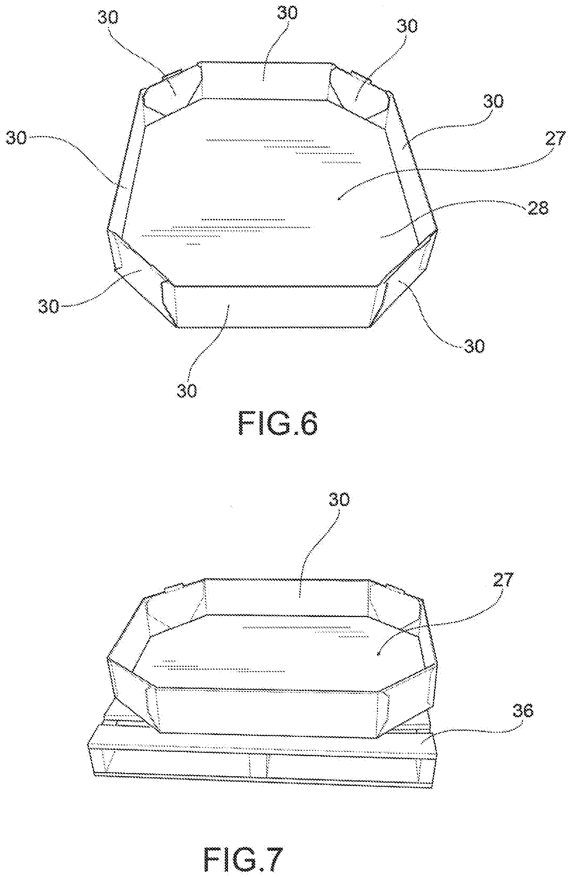

- Figure 6 shows a perspective view of the bottom of a self-supporting, octabin type, container, die-cut and folded to form a bottom with containment edge for lateral walls;
- Figure 7 is a perspective view of the bottom of a self-supporting container of Figure 6 placed on a transport pallet;

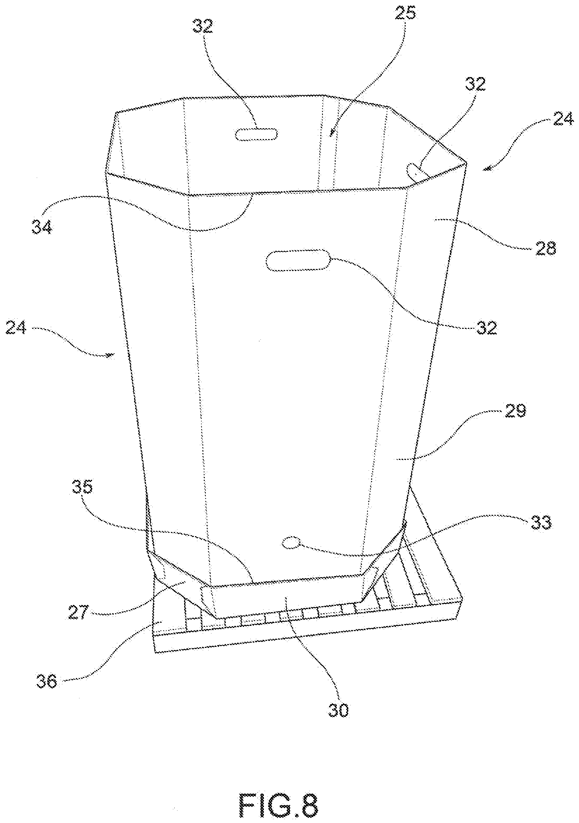

- Figure 8 shows in perspective view the bottom of a self-supporting container of Figure 6 placed on a transport pallet and in which is fitted the wall of an octabin type self-supporting container, where the lower edge of the wall is fitted inside the folded and lifted edge of the bottom;

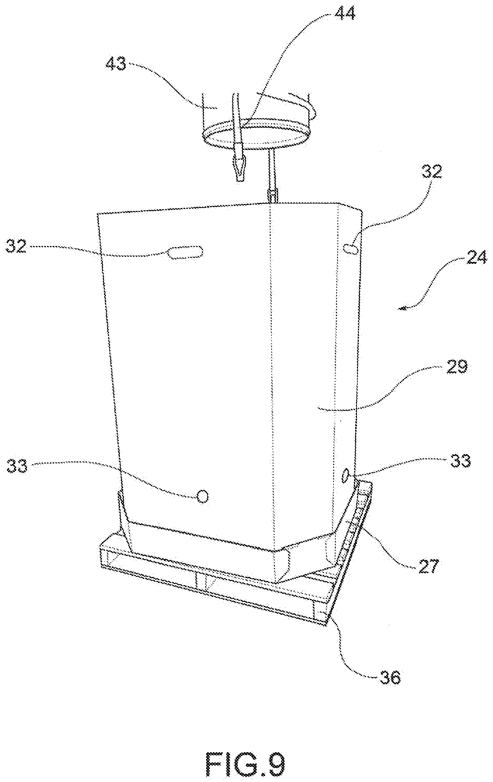

- Figure 9 is a perspective view of the assembly of Figure 8 placed below a loading hopper of roasted coffee beans;

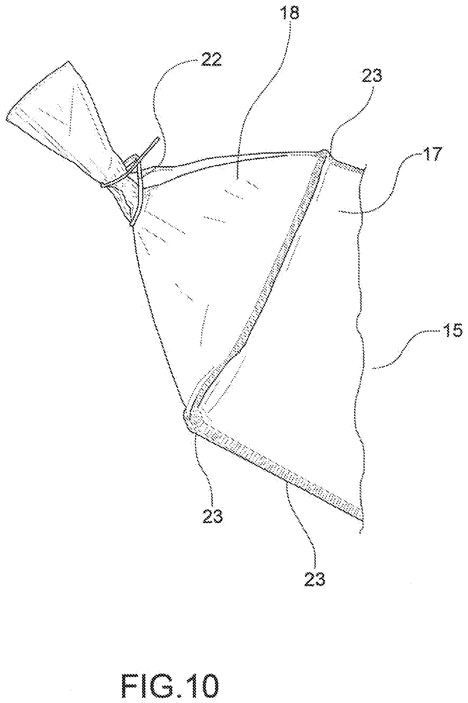

- Figure 10 shows a perspective view of a protection and transport sack in which the bottom is closed with a strap releasable when one wants to unload the contents of the sack;

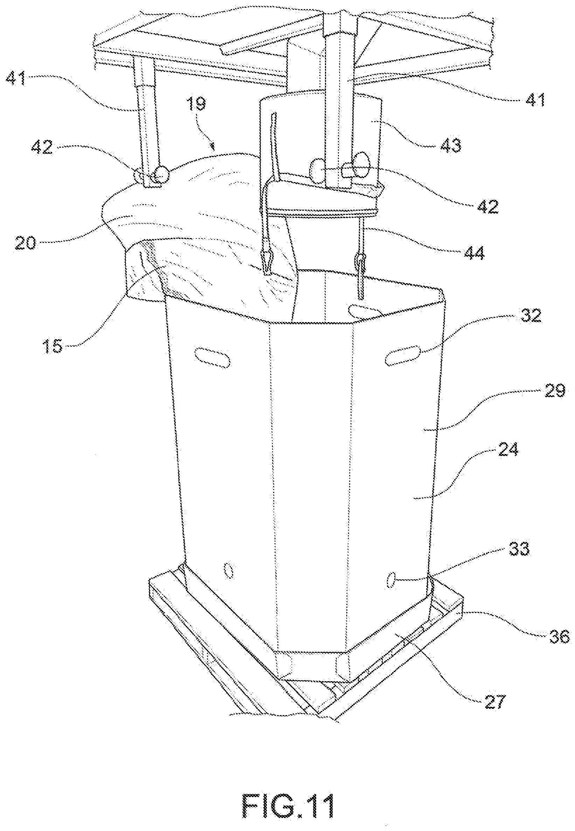

- Figure 11 shows in perspective view the bottom of a self-supporting container placed on a transport pallet and in which is fitted the wall of an octabin type self-supporting container, where the lower edge of the wall is fitted inside the folded and lifted edge of the bottom and in which is placed inside a protection and transport sack open and ready to be hooked with its handles to a support structure placed around the loading hopper of roasted beans;

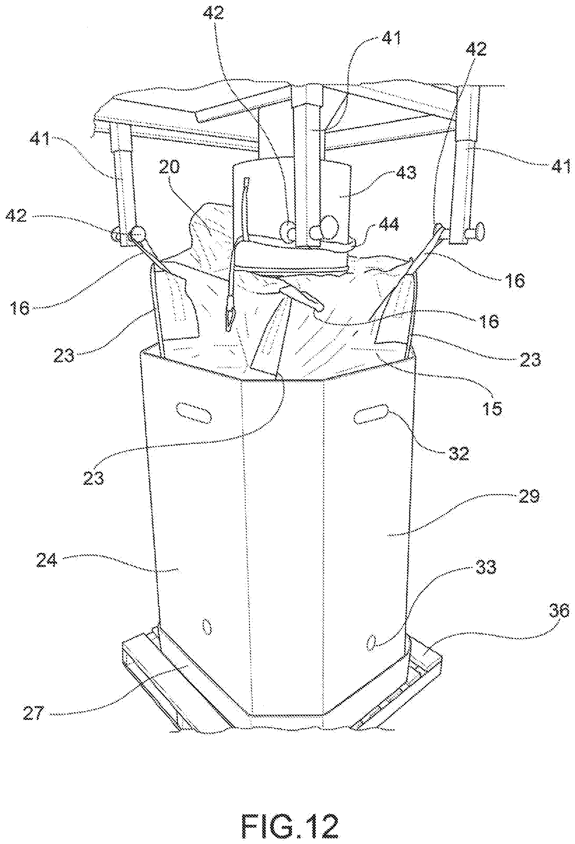

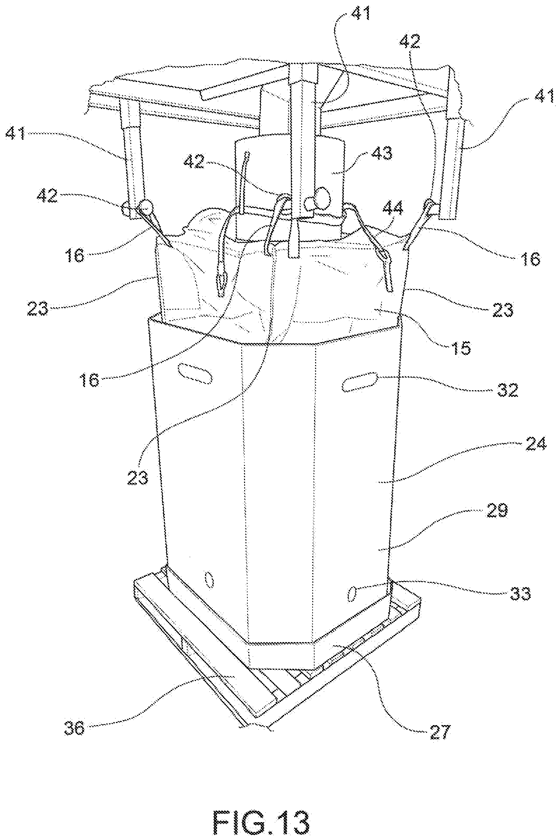

- Figures 12 and 13 show in perspective views, subsequent phases of Figure 11, in which the protection and collection is further open and the handles are hooked to the hooks of the support structure;

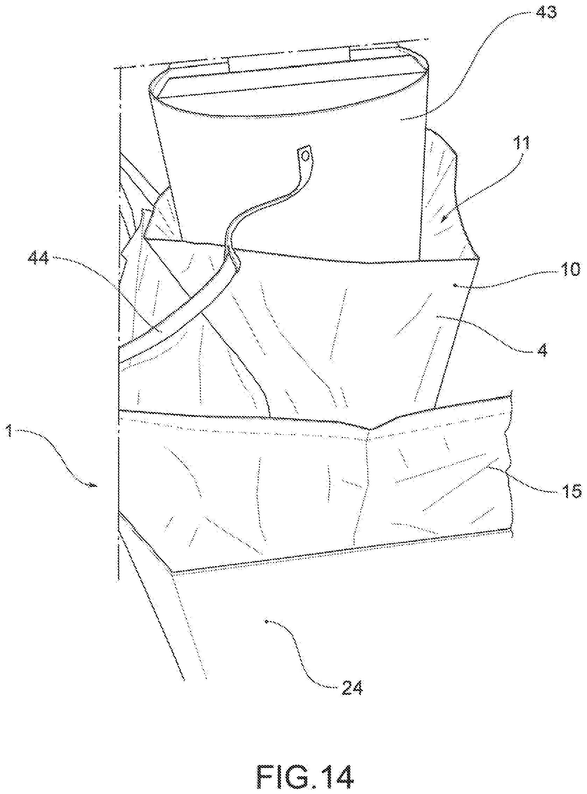

- Figure 14 illustrates in perspective view a detail of Figure 13 in which inside the protection and transport sack a lot impermeable bag is inserted, lying down or inflated because lying to bring its edges aligned with those of the protection and transport sack and with its mouth portion fitted on the loading hopper of the roasted beans;

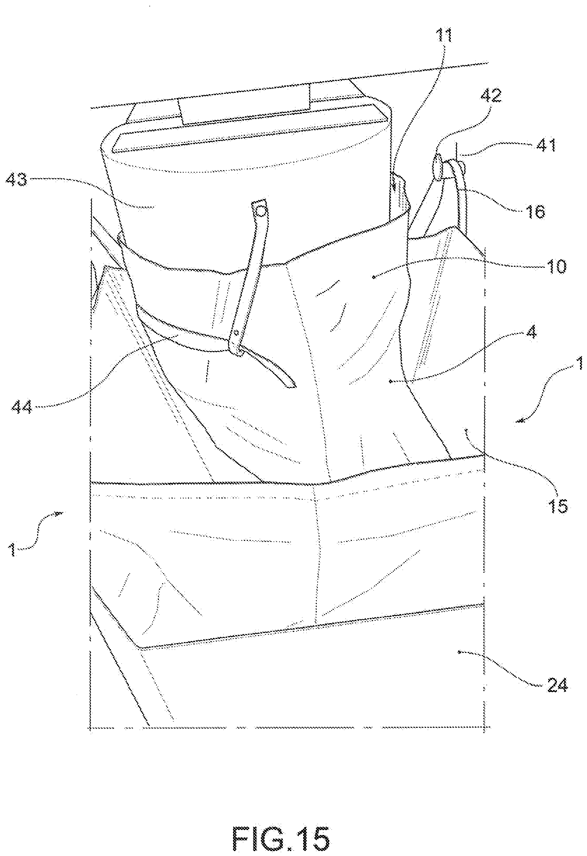

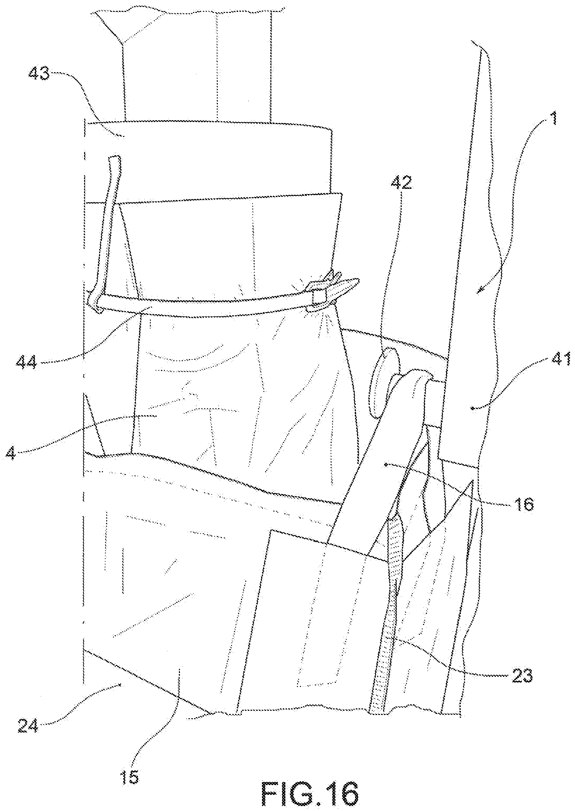

- Figures 15 and 16 phases subsequent to Figure 14 in which the mouth portion of the impermeable bag is tied around the hopper circled by a locking strap so that the impermeable bag remains constrained during the unloading of the coffee in roasted beans inside it;

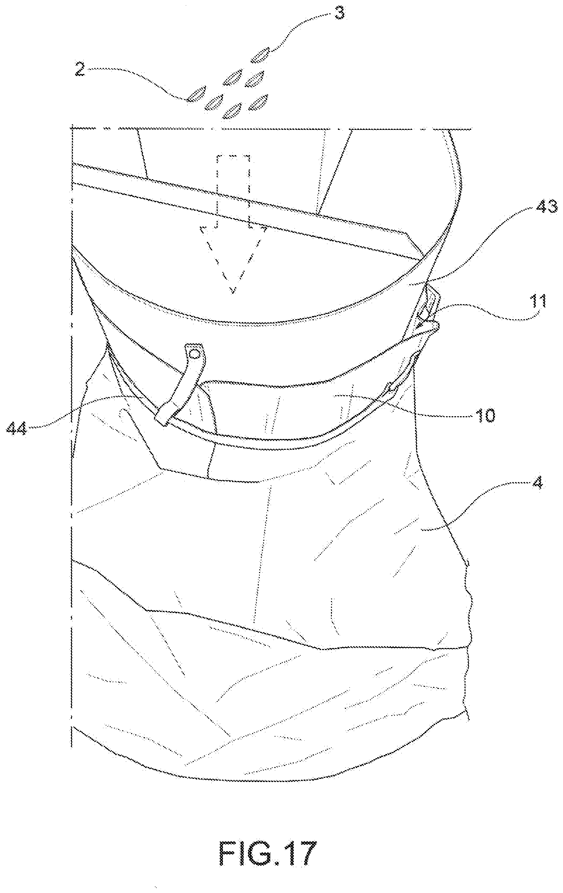

- Figure 17 illustrates in perspective view a detail of the loading phase of beans in the inner volume of the impermeable bag place inside the protection and transport sack accommodated in the self-supporting container;

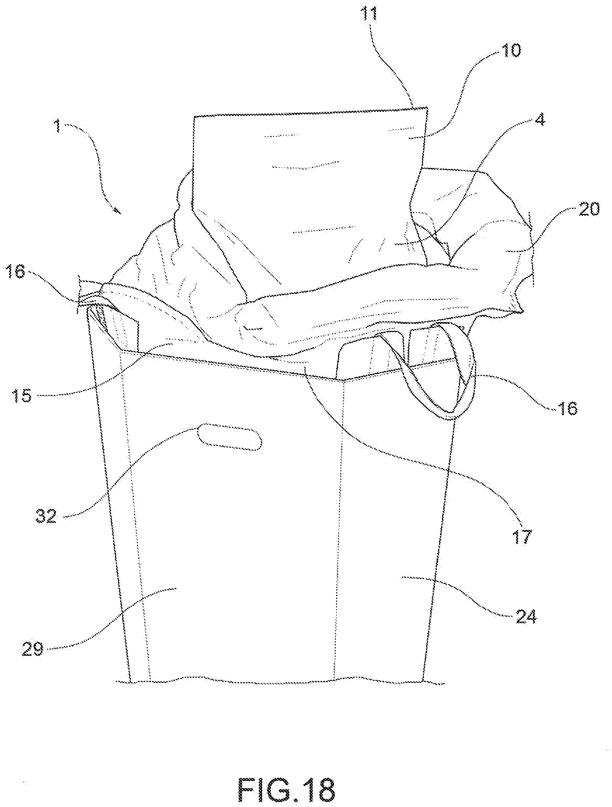

- Figure 18 illustrates the assembly of the impermeable bag filled with roasted coffee beans and having the mouth portion folded ready to be closed by heat-sealing, while the impermeable sack is accommodated in the protection and transport sack with its loading portion open and resting on the upper edge of the side wall of the self-supporting container in which said protection and transport sack is accommodated substantially entirely;

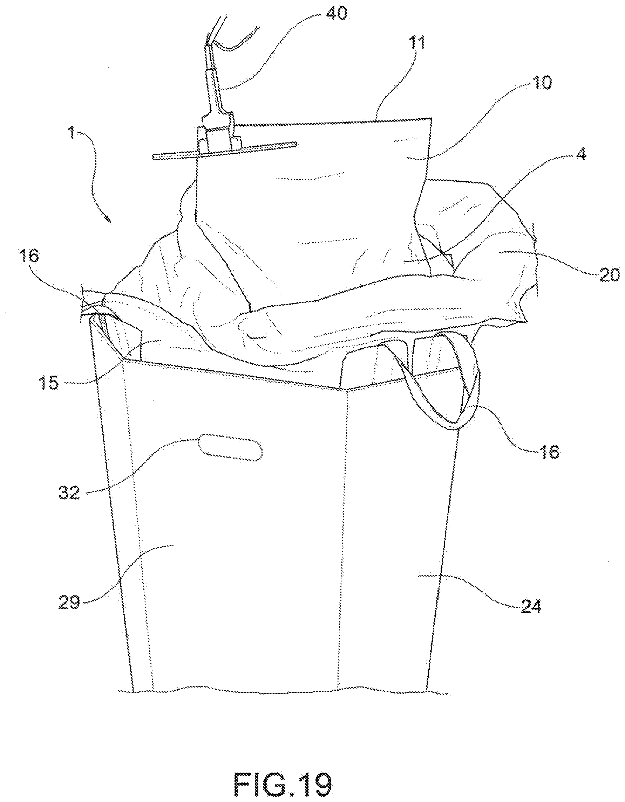

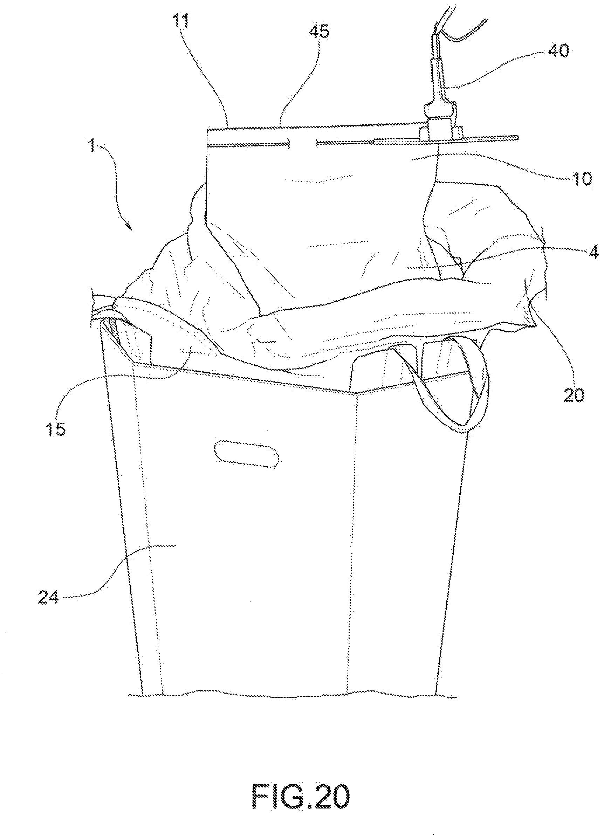

- Figures 19 and 20 show in perspective view two closing steps with heat-sealing of the loading mouth of the impermeable bag of Figure 18, leaving a gap for the insertion of a nozzle;

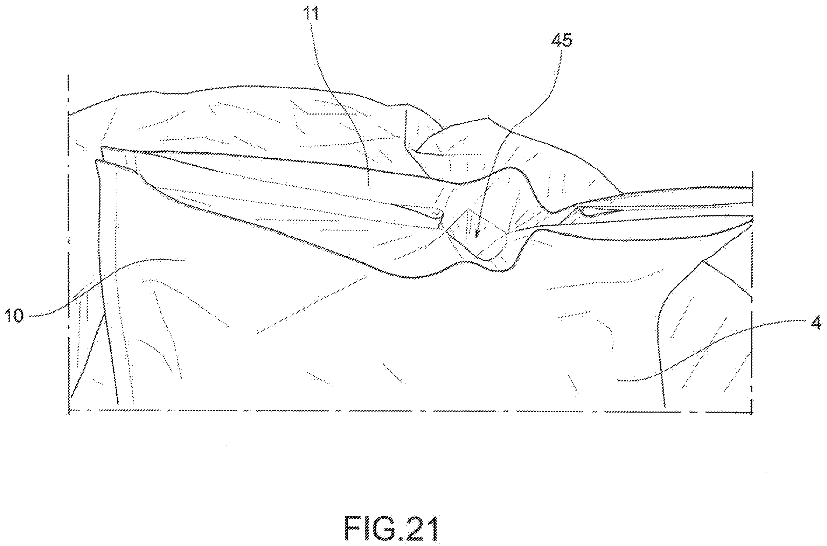

- Figure 21 shows a perspective view of an detail of the gap of Figure 20;

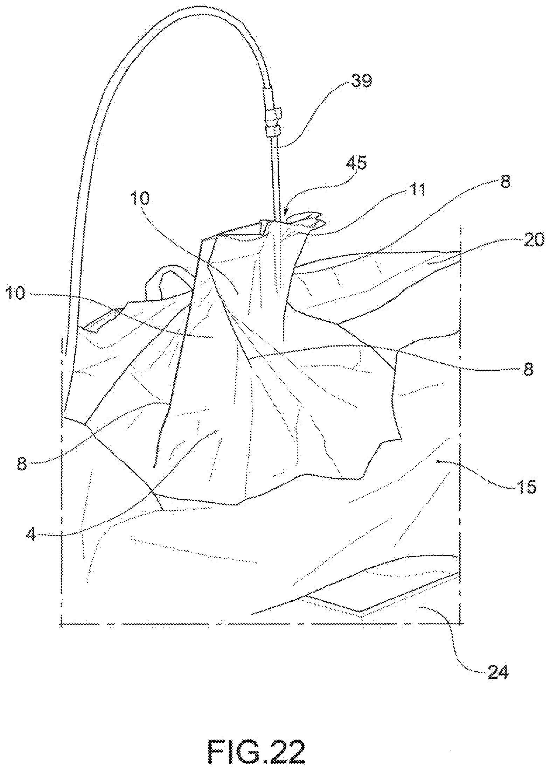

- Figure 22 illustrates a perspective view of an impermeable bag filled with roasted coffee beans, in which a nozzle is inserted in in a gap of the loading mouth to introduce gaseous nitrogen inside the inner volume and wash to beans to reduce the quantity of oxygen present inside the impermeable bag;

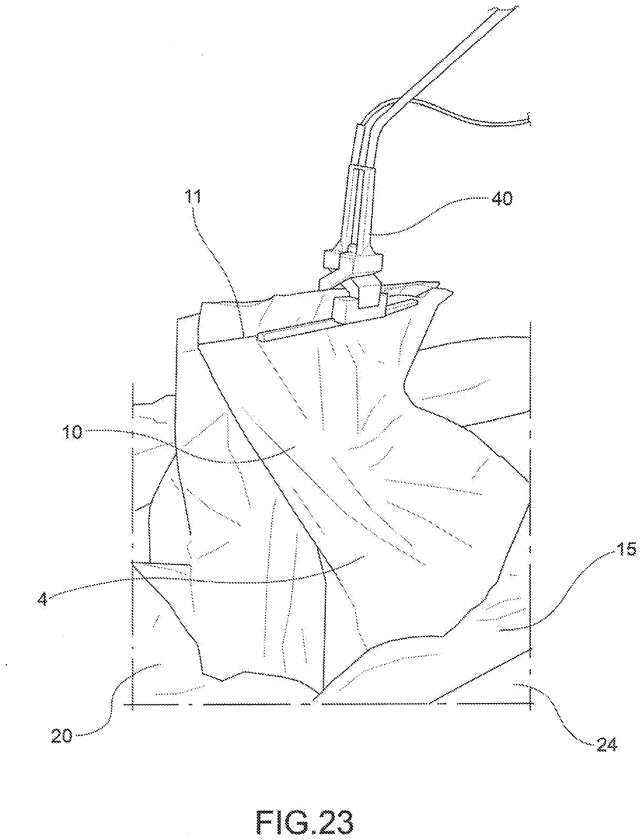

- Figure 23 illustrates in perspective view of the step of heat-sealing the gap of the loading mouth after washing the beans with gaseous nitrogen;

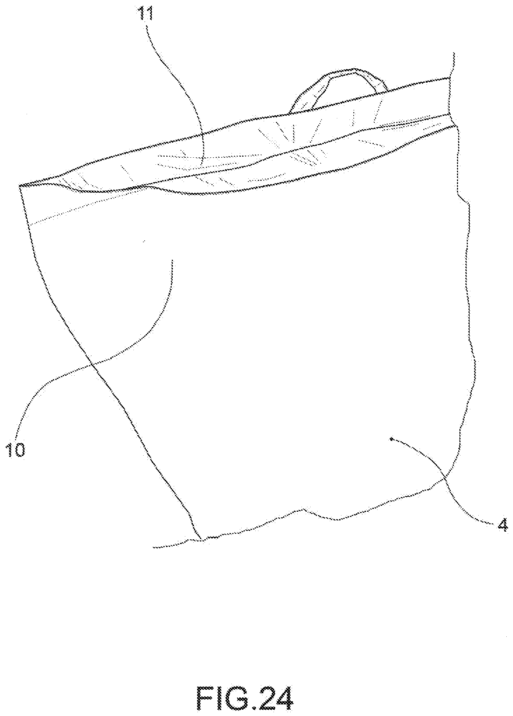

- Figure 24 shows an axonometric view of the loading mouth of an impermeable bag sealed by heat-sealing after loading of the beans and washing them nitrogen;

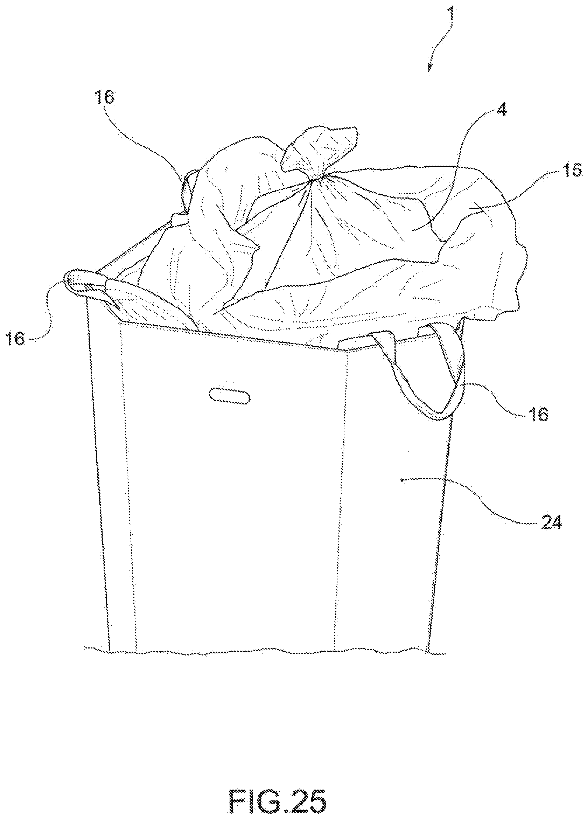

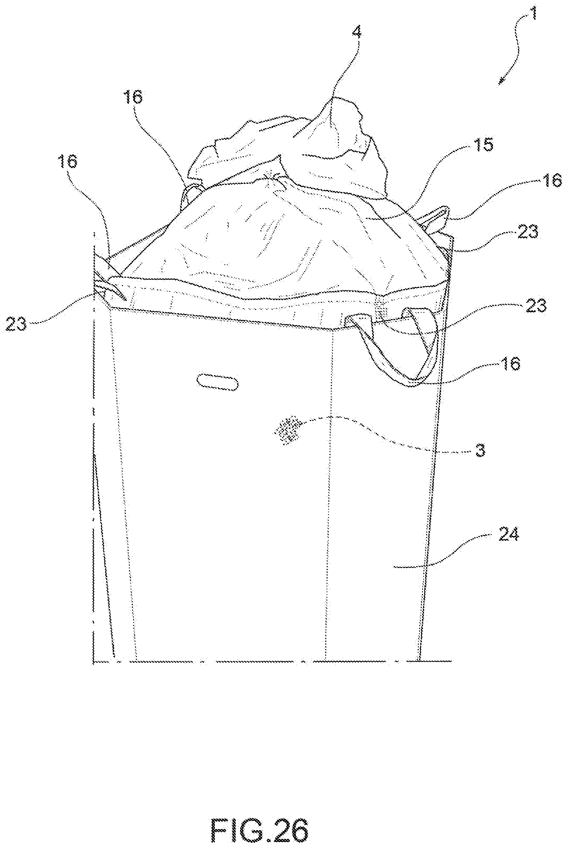

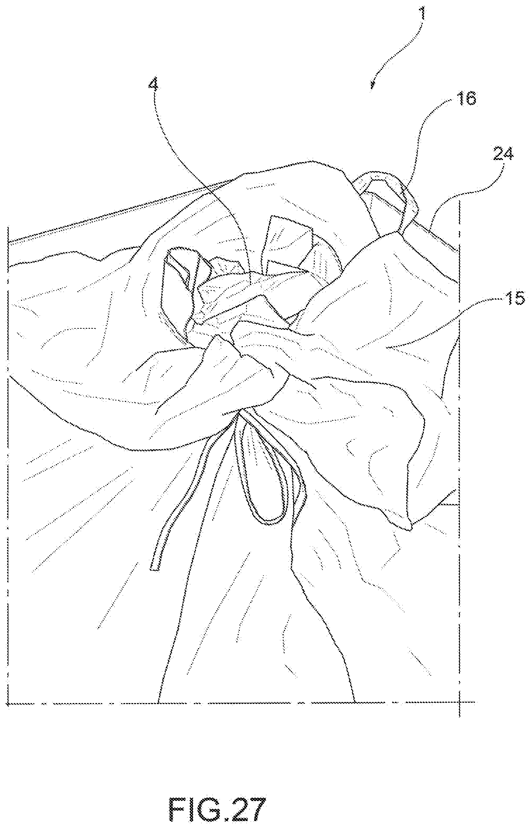

- Figures 25, 26 and 27 show in perspective view a detail of the assembly of an impermeable bag filled with roasted beans and washed with nitrogen, in which the mouth portion of impermeable bag is tied together with the loading portion of the protection sack, solidly joining the impermeable bag to the protection and transport sack;

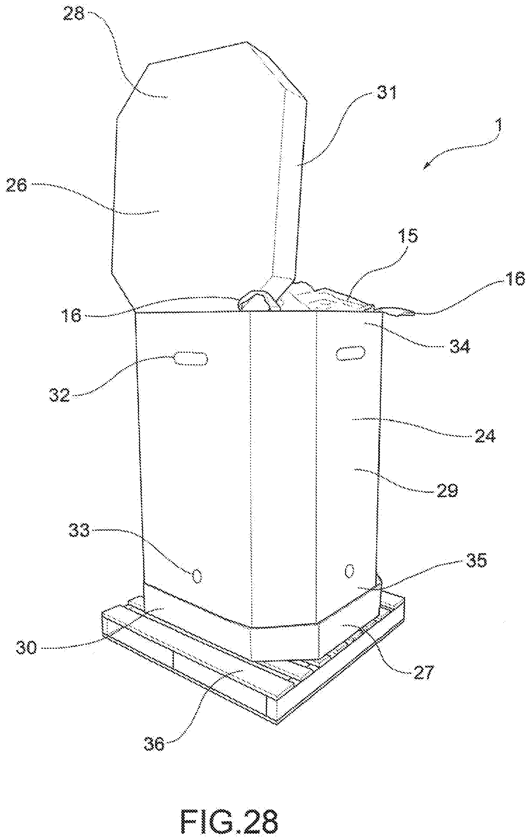

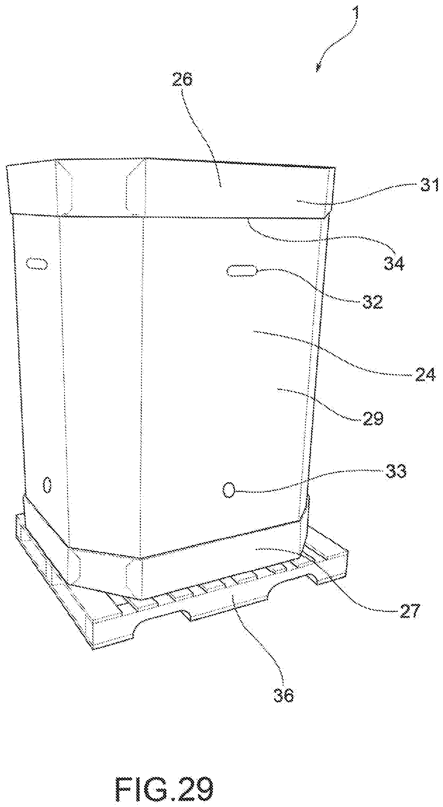

- Figures 28 and 29 show a perspective view of the assembly of an impermeable bag filled with roasted coffee beans and washed with nitrogen, inserted and with this tied in a protection and transport sack, both accommodated in an octabin type self-supporting container, closed by a cover and supported on a transport pallet;
- Figures 30 and 31 show a perspective view of the assembly of Figure 29 tied by bands or straps;

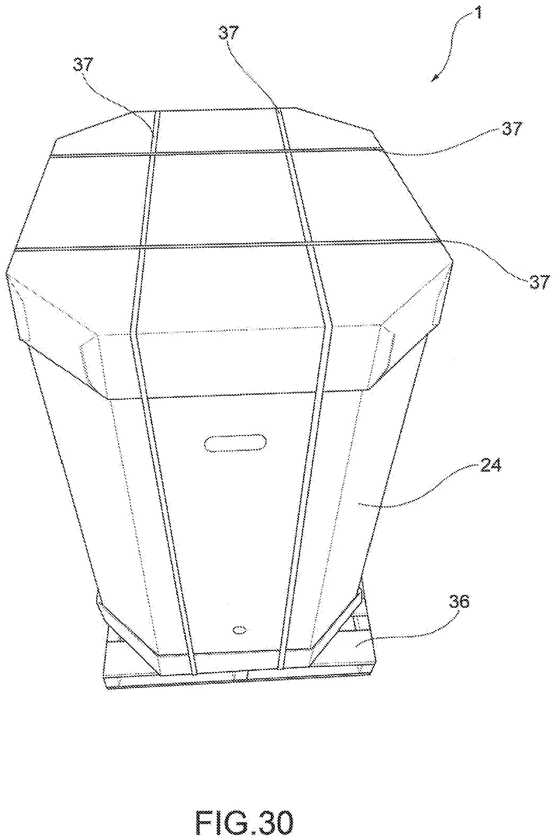

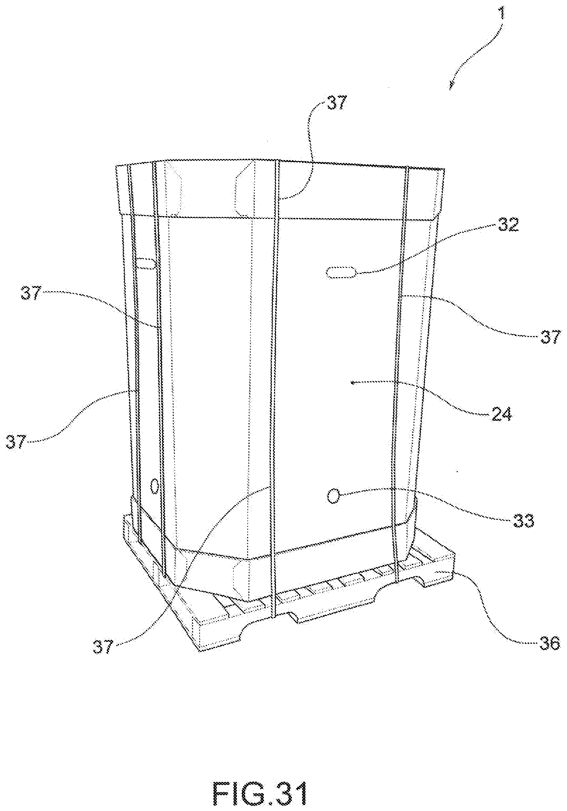

- Figures 30 and 31 show a perspective view of the assembly of an impermeable bag filled with roasted coffee beans and washed with nitrogen, inserted and with this tied in a protection and transport sack, both accommodated in an octabin type self-supporting container and tied with locking bands or straps;

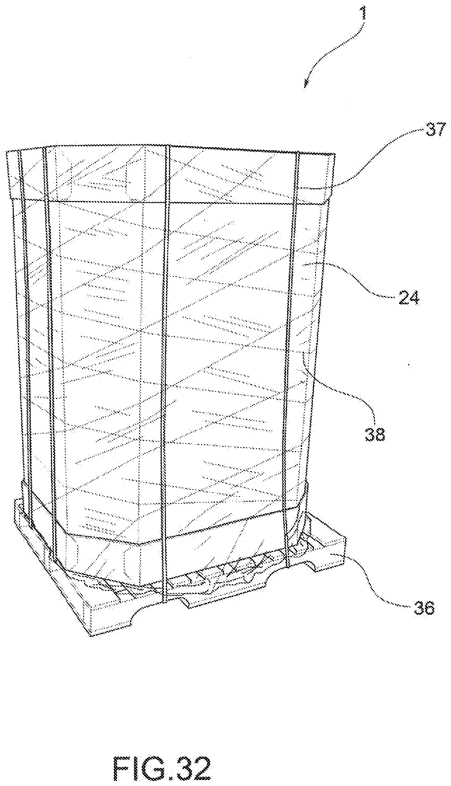

- Figure 32 illustrates a perspective view of the assembly of Figure 31 wrapped in a stretchable film for additional protection and stabilisation, which may also be wrapped avoiding the use of bands or straps;

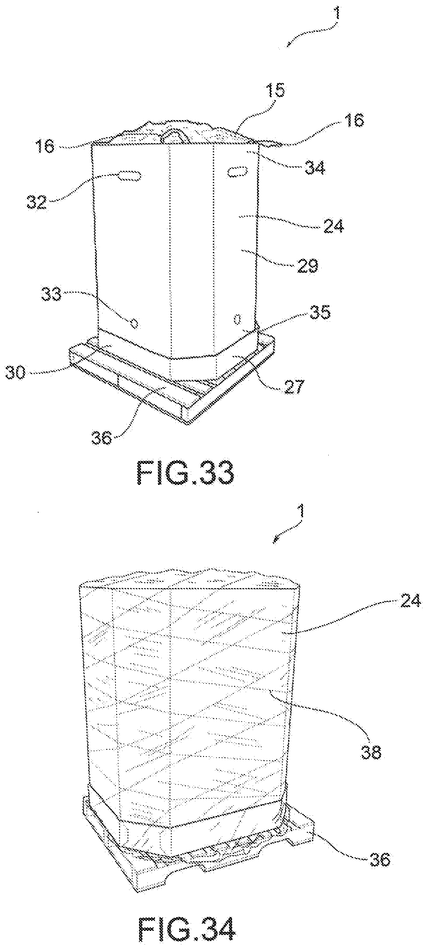

- Figure 33 shows a perspective view of the assembly of an impermeable bag filled with roasted coffee beans, inserted and with this tied in a protection and transport sack, both accommodated in an octabin type self-supporting container, open, i.e., without a cover and resting on a transport pallet and suitable, in this form, to transport the coffee;
- Figure 34 shows a perspective view of the assembly of Figure 33, but in a different embodiment for a different transport, wrapped in a stretchable film for additional protection and stabilisation and suitable in this further form for the transport of the coffee;

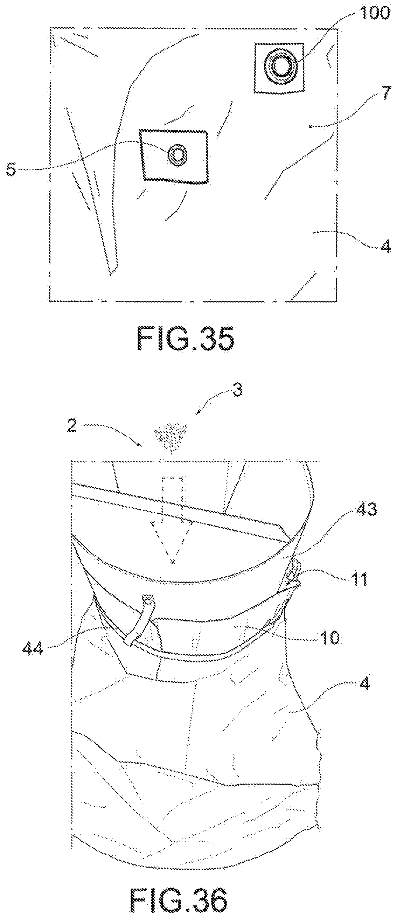

- Figure 35 represents a perspective view of a detail of the side wall portion of an impermeable bag, according to a different embodiment, not included in the present invention, to which is associated a unidirectional fitting for the attachment of a system for the creation of depression inside the impermeable bag and to which is associated at least one unidirectional valve that allows the escape of gas from the inner volume of the impermeable bag, avoiding the entry of pollutants and air from the outside inside the impermeable bag;
- Figure 36 illustrates in perspective view a detail of the loading phase of ground coffee in the inner volume of the impermeable bag place inside the protection and transport sack accommodated in the self-supporting container, according to a different embodiment;

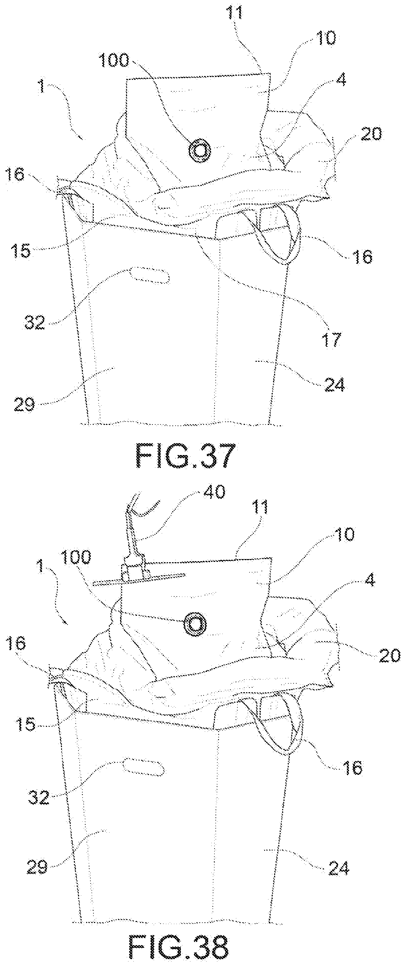

- Figure 37 illustrates the assembly of the impermeable bag filled with roasted and ground coffee and having the mouth portion folded ready to be closed by heat-sealing, while the impermeable sack is accommodated in the protection and transport sack with its loading portion open and resting on the upper edge of the side wall of the self-supporting container in which said protection and transport sack is accommodated substantially entirely;

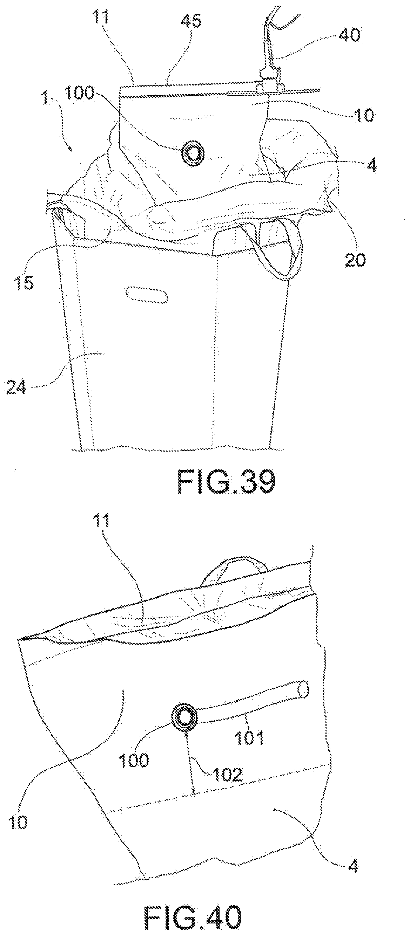

- Figures 38 and 39 show in perspective view two closing steps with heat-sealing of the loading mouth of the impermeable bag of Figure 37;
- Figure 40 illustrates an axonometric view of the loading mouth of an impermeable bag sealed by heat-sealing after loading the ground coffee, not included in the present invention, as well as a depression or vacuum system connected to the unidirectional fitting to create a depression inside the impermeable bag; in particular the mouth is placed at a predefined distance from the upper edge of the coffee contained in the impermeable bag;

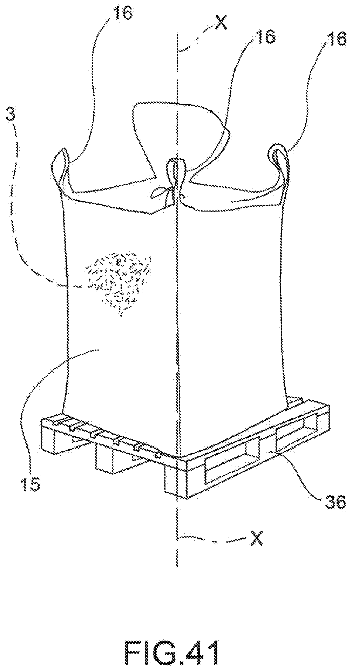

- Figure 41 shows a perspective view of an assembly comprising an impermeable bag filled with roasted and ground coffee accommodated in the impermeable bag, inserted tied with this in a protection and transport sack placed on a transport pallet.

### Description of several preferred embodiments

The elements, or parts of elements, in common between the embodiments described below will be indicated with the same reference numbers.

With reference to the figures, and according to a general embodiment, a packaging assembly (1) for the transport and/or warehousing or the storage of coffee (2) roasted (3), in beans or ground comprises at least one impermeable bag (4), of the type impermeable at least at the entrance into its inner volume, when sealingly closed and sealed tight, to oxygen and water vapour.

Said at least one impermeable bag (4) is flexible and sealable so as to prevent the entry of fluids or gases inside it.

Said at least one impermeable bag (4) delimits internally an impermeable bag inner volume (6). Said impermeable bag inner volume (6) is a single volume in which is placed roasted and ground coffee (3) for at least 100 kg.

Said assembly further comprises at least one protection and transport bag (15). Said at least one protection and transport sack (15) is fitted over said at least one impermeable bag (4) for protection against the risk of damage of the impermeable bag (4) and to facilitate its handling.

Said assembly (1) comprises at least one unidirectional valve (5) sealingly applied to said at least one impermeable bag (4). Said valve (5) allows only the escape of gas from the impermeable bag (4), but avoids the entry of gas in the impermeable bag (4).

Said at least one unidirectional valve (5) allows creating an over-pressure inside the impermeable bag (4) variable from 3 to 9 mbar, preferably variable from 10 to 60 mbar.

According to an embodiment, said at least one unidirectional valve (5) opens upon reaching a pressure, or opening pressure, variable from 20 to 60 mbar and closes upon reaching a pressure, or closing pressure, variable from 10 to 40 mbar.

According to a further embodiment, said at least one unidirectional valve (5) opens upon reaching a pressure, or opening pressure, variable from 3 to 9 mbar and closes at a closing pressure higher than, or equal to, 0.5 mbar. For example, this valve is used for coffee with a higher degree of roasting which determines a need for regulation of the pressure to lower values with respect to a less roasted coffee.

Below will be described alternative embodiments all falling within the scope of this invention.

According to an embodiment, said at least one impermeable bag (4) delimits internally an impermeable bag inner volume (6) of at least 500 litres.

According to an embodiment, said impermeable bag inner volume (6) is between 1100-1600 litres.

According to an embodiment, said impermeable bag inner volume (6) is filled to 60% -80% in volume with roasted coffee beans (3).

According to an embodiment, said impermeable bag inner volume (6) is filled with 350-450 kg of roasted coffee beans (3).

Said at least one unidirectional valve (5) allows reaching an over-pressure inside the impermeable bag (4) variable from 3 to 60 mbar. According to an embodiment, said at least one unidirectional valve (5) allows reaching an over-pressure inside the impermeable bag (4) variable from 10 to 40 mbar. According to an embodiment, said at least one unidirectional valve (5) allows reaching an over-pressure inside the impermeable bag (4) variable from 20 to 60 mbar. According to an embodiment, said at least one unidirectional valve (5) allows reaching an over-pressure inside the impermeable bag (4) variable from 3 to 9 mbar

According to an embodiment, said at least one unidirectional valve (5) are at least two unidirectional valves (5) applied to said impermeable bag (4). Thanks to this embodiment, not only is it possible to ensure greater security in the control of the pressure inside the impermeable bag, but it is also possible to ensure a speedy evacuation of the gas at an excessive over-pressure in an assembly with large loading capacity or volume as that described here. In fact, the speed of reaction of the assembly reaction to over-pressure ensures at the same time greater security that the assembly will not be damaged during its handling or transport.

According to an embodiment, not included in the present invention, the assembly (1) comprises at least one unidirectional fitting for extraction of fluids such as air (100) and to create an internal depression between -50 mbar and -400 mbar.

According to an embodiment, not included in the present invention, said inner volume (6), when said at least one impermeable bag (4) is closed and sealed, is under vacuum with depression between -50 mbar to -400 mbar.

According to an embodiment, not included in the present invention, said unidirectional fitting for extraction of fluids such as air (100) comprises a filter to prevent the ground coffee (3) from being aspirated during the formation of the depression in the volume (6).

According to an embodiment, said unidirectional fitting for extraction of fluids such as air (100) comprises a non-return valve that prevents air from entering into the impermeable bag (4) .

According to an embodiment, said unidirectional fitting for extraction of fluids such as air (100) is placed in or near a mouth portion of impermeable bag (10) of the impermeable bag (4).

Said inner volume of impermeable bag (6) is filled with roasted and ground coffee (3) and said unidirectional fitting for extraction of fluids such as air (100) is placed at least 50 cm above the roasted and ground coffee (3).

According to an embodiment, said inner volume of impermeable bag (6) is a single volume and is filled with roasted and ground coffee (3) for at least 400 kg.

Said assembly comprises at least one unidirectional valve (5) sealingly applied to said at least one impermeable bag (4) which only allows the outflow of gas from the impermeable bag (4) while preventing the entry of gas in the impermeable bag (4).

According to an embodiment, said at least one unidirectional valve (5) allows creating an over-pressure inside the impermeable bag (4) variable from 10 to 60 mbar.

In accordance with an embodiment, said impermeable bag (4) is a die-cut blank. Thanks to this embodiment, the impermeable bag is easy to construct by coupling sheets initially cut from a flat sheet into the desired shape and heat-sealing them at their edges to form, for example, a three-dimensional shape.

According to an embodiment, said impermeable bag (4) comprises an impermeable bag side wall portion (7), for example in a parallelepiped shape.

According to an embodiment, said impermeable bag side wall portion (7) has a cross-section, at a longitudinal extension (X-X) of the bag, of quadrangular shape.

According to an embodiment, said impermeable bag side wall portion (7) has four flat lateral surfaces suitable to mate with each other and fill the entire inner space of an outer protective element, such as for example a protection and transport sack, as will be described below. According to an embodiment, said impermeable bag side wall portion (7) has impermeable bag heat sealings (8) to delimit at least four corners.

Differently, and according to an embodiment, said impermeable bag side wall portion (7) is of tubular shape.

According to an embodiment, said at least one unidirectional valve (5) is applied to said at least one impermeable bag side wall portion (7).

According to an embodiment, said impermeable bag (4) comprises an impermeable bag bottom portion (9), for example with inverse conical shape and suitable for emptying the bag when torn at its apical portion to unload the roasted beans when the assembly has arrived at its destination.

According to an embodiment, said impermeable bag (4) comprises a closable impermeable bag mouth portion (10) which defines an impermeable bag opening or loading mouth (11) for introducing roasted coffee beans (3) in the at least one impermeable bag (4).

According to an embodiment, said impermeable bag mouth portion (10) connects said side wall portion (7) to said loading mouth (11) by means of conical walls (12) having a linear shape, so as to facilitate the loading of roasted beans (3) preventing them from stopping or slowing down at the mouth of said impermeable bag (4) itself.

According to an embodiment, the angle between the extension of the side wall portion (7) and the linear conical wall mouth portion (12) is between 20° and 30°, preferably 25°. From experimental tests carried out, this angle turns out to be optimal for the fastest loading of roasted beans from a hopper.

According to an embodiment, a longitudinal axis (X-X) of impermeable bag (4) passes through the loading mouth (11). When the impermeable bag (4) is in an extended position, the transverse dimension of side wall (13) at the longitudinal axis (X-X) of the side wall portion (7) has a dimension at least three times the transverse dimension of loading mouth (14) of the loading mouth (11). This proportion was found through experimental tests to be the optimum proportion for a rapid uniform distribution of roasted beans in the volume of the impermeable bag.

According to an embodiment, said impermeable bag (4) is die-cut and comprises a plurality of walls (7, 9, 10) welded, preferably heat-sealed, together.

According to an embodiment, said impermeable bag (4) has oxygen permeability less than 0.1 cubic centimetres(=millilitre ml)/m²/24h at 23 °C 0% RH (relative humidity).

According to an embodiment, said impermeable bag (4) has water vapour permeability lower than 0.1 g/m²/24h at 38 °C and 90% RH.

According to an embodiment, said impermeable bag (4) comprises a polylaminate material body.

According to an embodiment, said impermeable bag (4) comprises at least one wall (7, 9, 10) comprising at least one sheet of aluminium.

According to an embodiment, said impermeable bag (4) comprises at least one wall comprising:
- polyester
- aluminium
- oriented polyamide
- coex polyethylene.

According to an embodiment, said impermeable bag (4) comprises at least one wall comprising:
- polyester 12 micro-metres thick,
- aluminium 6.35 micro-metres thick
- oriented polyamide 15 micro-metres thick
- coex polyethylene 110 micro-metres thick.

According to an embodiment, said impermeable bag (4) comprises at least one wall comprising:
- polyester 12 micro-metres thick,
- aluminium 6.35 micro-metres thick
- oriented polyamide 15 micro-metres thick
- a bi-oriented, co-extruded, polyethylene film 110 micro-metres thick.

According to an embodiment, said sheets are polylaminated to each other with polyurethane adhesive.

According to an embodiment, the assembly (1) comprises roasted coffee beans (3) placed inside the impermeable bag (4).

According to an embodiment, the inner volume of impermeable bag (6) is filled to 60 to 80% of roasted beans or ground coffee (3).

According to an embodiment, said impermeable bag (4) is filled with 350 to 450 kg of roasted coffee (3).

According to an embodiment, said inner volume of impermeable bag (6) contains nitrogen N2 in an amount to reduce the amount of oxygen 02 inside the volume of impermeable bag.

According to an embodiment, said inner volume of impermeable bag (6) is washed with 2 cubic metres of nitrogen with the impermeable bag (4) open, so as to wash the inner volume and the coffee with gaseous nitrogen, expelling air and in particular oxygen from the inner volume.

According to an embodiment, said roasted beans (3) contained in said impermeable bag (4) are washed with nitrogen at least 3-4 times.

According to an embodiment, said inner volume of impermeable bag (6), when sealed, contains nitrogen N2 in an amount to reduce the amount of oxygen to values lower than 6% in volume of the impermeable bag (4).

According to an embodiment, when the impermeable bag is sealed and containing roasted coffee (3), the amount of oxygen present in the inner volume of impermeable bag (6) is less than 6% in inner volume of the impermeable bag (6).

According to an embodiment, when the impermeable bag is sealed and containing roasted coffee (3), the amount of oxygen present in its inner volume of impermeable bag (6) is less than 5% in inner volume of the impermeable bag (6).

Said assembly comprises at least one protection and transport sack (15).

Said at least one protection and transport sack (15) is fitted over said at least one impermeable bag (4) for protection against the risk of damage of the impermeable bag (4) and to facilitate its handling.

Said at least one protection and transport sack (15) is flexible.

According to an embodiment, said protection and transport sack (15) is of the Flexible Intermediate Bulk Container, or FIBC, type for the transport of bulk items.

Said protection and transport sack (15) comprises loops or handles (16) suitable for handling the assembly (1).

According to an embodiment, said protection and transport sack (15) comprises four handles (16).

Said protection and transport sack (15) comprises a tubular protection and transport sack wall (17), as well as a protection and transport sack bottom (18) with closable protection and transport sack discharging or unloading opening (19) and a protection and transport sack loading portion (20) delimiting a closable protection and transport sack loading opening (21), mechanically closable, for example by means of a drawstring.

According to an embodiment, said protection and transport sack (15) comprises a protection and transport sack closure (22), preferably a knot or a tie, tied around said protection and transport sack loading portion (20) simultaneously tying together the impermeable bag mouth portion to solidly join said protection and transport sack and said impermeable bag that, at the time of unloading, are hung together, for example thanks to the handles (16) and the impermeable bag is emptied by first opening the bottom of the protection and transport sack and then cutting the bottom of the impermeable bag.

According to an embodiment, said protection and transport sack (15) has a parallelepiped shape.

According to an embodiment, said protection and transport sack (15) has a cylinder shape.

According to an embodiment, said protection and transport sack (15) comprises a longitudinal axis (X-X) and said protection and transport sack (15) has a cross-section to said longitudinal axis of quadrangular shape.

According to an embodiment, said handles (16) are provided near four corners of the protection and transport sack (23) for transporting or hanging said sack without deforming it.

According to an embodiment, said protection and transport sack (15) comprises a body in tubular fabric, preferably sewn defining corners (23).

According to an embodiment, said protection and transport sack (15) comprises a body that comprises polypropylene.

According to an embodiment, said protection and transport sack (15) comprises a body that comprises fabric comprising polypropylene.

According to an embodiment, said protection and transport sack (15) comprises a body that comprises at least one layer comprising polypropylene.

According to an embodiment, said protection and transport sack (15) comprises a body that comprises at least one layer comprising raffia fabric.

According to an embodiment, said protection and transport bag (15) comprises a body that comprises at least one layer comprising at least one layer made of jute and/or non-woven fabric.

According to an embodiment, the assembly (1) comprises at least one self-supporting container (24) defining a self-supporting container inner volume (25) closable by a self-supporting container lid (26) and a self-supporting container bottom (27) in which at least one impermeable bag (4) is inserted on which at least one protection and transport sack (15) is fitted.

According to an embodiment, said self-supporting container (24) is of the octabin type.

According to an embodiment, said self-supporting container (24) is of the pallet size box type.

According to an embodiment, said self-supporting container (24) is made of shaped and die-cut sheets.

According to an embodiment, said self-supporting container (24) comprises a body comprising at least one corrugated cardboard layer (28).

According to an embodiment, said self-supporting container (24) comprises die-cut self-supporting container walls (29) .

According to an embodiment, said self-supporting (24) comprises fitted or glued joints, avoiding hooks or clips or staples.

According to an embodiment, said self-supporting container walls (29) comprise glued joints, avoiding hooks or clips or staples.

According to an embodiment, said self-supporting container (24) comprises a self-supporting container bottom (27) which comprises a self-supporting container bottom edge (30) folded into a self-supporting container walls (29) containment element.

According to an embodiment, said self-supporting container walls (29) are inserted in said self-supporting container bottom (27) and rest thereon at the self-supporting container bottom edge (30).

According to an embodiment, said self-supporting container (24) comprises a self-supporting container lid (27) which comprises a self-supporting container lid edge (30) folded into a self-supporting container walls (29) containment and closure element.

According to an embodiment, said self-supporting container lid (26) is fitted to the self-supporting container walls (29).

According to a further embodiment, the fitting of said self-supporting container lid (26) on the self-supporting container (29) for transport in this form (Figure 33) is avoided.

According to an embodiment, at least one self-supporting container wall (29) comprises at least one inspection window (32, 33) forming a through opening.

According to an embodiment, at least one of the self-supporting container walls (29) comprises at least two windows.

According to an embodiment, said at least one inspection window (32, 33) is placed in near to an upper edge of the wall (34) next to the lid (26) or to the upper edge without lid, to allow the inspection of the seal of the impermeable bag (4) after a predetermined period of time that allows the escape of gas (CO2) from the roasted beans and the formation in the volume of impermeable bag (4) of an over-pressure that manifests the proper closure of the impermeable bag (4).

According to an embodiment, said at least one inspection window (32, 33) is placed near a lower edge of the wall (35) near the self-supporting container bottom (27).

According to an embodiment, said at least one window (32, 33) is placed 200-300 mm from the edge (34, 35) of the self-supporting container wall (29).

According to an embodiment, said self-supporting container wall (29) comprises an upper window (32) and a lower window (33).

According to an embodiment, said upper window (32) is used to test the sealed closure of the impermeable bag (4) containing the coffee in over-pressure. For example, through this window (32) it is possible to check, after filling and sealing the impermeable bag, that it is in over-pressure by pressing the protection and transport sack fitted on the impermeable bag with a hand or sensor.

According to an embodiment, said lower window (33) is used to insert a needle probe into the protection and transport sack (15) and into the impermeable bag (4) and test the gases inside the impermeable bag (4). For example, in this way it is possible to test the amount of oxygen present in the impermeable bag before emptying it.

According to an embodiment, said upper window (32) is used to test the seal of the impermeable bag (4) containing the coffee under vacuum.

According to an embodiment, said upper window (32) is used to test the sealed closure of the impermeable bag (4) containing the coffee in over-pressure. For example, through this window (32) it is possible to check, after filling and sealing the impermeable bag, that it is in over-pressure by pressing the protection and transport sack fitted on the impermeable bag with a hand or sensor.

According to an embodiment, said packaging assembly (1) comprises at least one transport pallet (36) on which rests the protection and transport sack (15) within which the at least one impermeable bag (4) is inserted in which is placed roasted and ground coffee (3).

According to an embodiment, said packaging assembly (1) comprises strapping, or locking bands (37), which embrace closing said protection and transport sack (15).

According to an embodiment, said packaging assembly (1) comprises at least one stretchable film (38) wrapped around said protection and transport sack (15) to protect, waterproof and stabilise it. According to an embodiment, said stretchable film (38) wrapped around said protection and transport sack (15) is used without first locking the bag with the strapping (37).

According to an embodiment, said packaging assembly (1) comprises at least one transport pallet (36) which the self-supporting container (24) rests on.

According to an embodiment, said packaging assembly (1) comprises strapping or locking bands (37) which embrace said self-supporting container (24), closing it. According to an embodiment, this strapping is both provided in the embodiment that sees the assembly provided with a lid (26) and alternatively in the assembly where the use of the lid (26) is avoided.

According to an embodiment, said strapping (37) also embraces said transport pallet (36), solidifying and stabilising the assembly (1).

According to an embodiment, said packaging assembly (1) comprises at least one stretchable film (38) wrapped around the self-supporting container (24) to protect, waterproof and stabilise it.

According to an embodiment, said at least one stretchable film (38) is also wrapped around the transport pallet (36) to solidify and stabilise the assembly (1), avoiding the use of the strapping (37).

Below, we will describe a method of packaging roasted coffee beans.

According to a general embodiment, a packaging method of roasted coffee beans (3) comprises at least the steps of:
- providing the roasted coffee beans (3);
- inflating air in a flexible, sealed impermeable bag (4) to open it ready to receive the roasted coffee beans;
- pouring the coffee beans (3) into a flexible and sealable impermeable bag (4);
- sealing said impermeable bag (4);
- preventing gas or fluids from entering the impermeable bag (4);
- adjusting the pressure inside the impermeable bag (4) so that it is between 3 and 60 mbar with respect to external pressure.

According to an embodiment, a method comprises one or more of the further steps listed below:
- adjusting the pressure inside the impermeable bag (4) so that it is between 3 and 9 mbar with respect to external pressure; and/or
- adjusting the pressure inside the impermeable bag (4) so that it is between 10 and 60 mbar with respect to the external pressure; and/or
- adjusting the pressure inside the impermeable bag (4) so that it is between 10 and 40 mbar with respect to the external pressure; and/or
- pouring into said impermeable bag (4) a quantity of roasted coffee occupying a minimum volume of at least 500 litres; and/or
- pouring into said impermeable bag (4) a quantity of roasted coffee occupying a volume varying from 1100 to 1600 litres; and/or
- pouring into said impermeable bag (4) a quantity of roasted coffee varying from 350 kg to 450 kg; and/or
- filling the impermeable bag (4) with roasted coffee beans (3) up to 60-80% of the impermeable bag inner volume (6); and/or
- adjusting the pressure inside the impermeable bag (4) so that it is between 3 and 60 mbar with respect to external pressure or atmospheric pressure; and/or
- adjusting the pressure inside the impermeable bag (4) so that it is between 3 and 9 mbar with respect to external pressure or atmospheric pressure; and/or
- adjusting the pressure inside the impermeable bag (4) so that it is between 10 and 40 mbar with respect to external pressure or atmospheric pressure; and/or
- adjusting the pressure inside the impermeable bag (4) so that it is between 10 and 60 mbar with respect to external pressure or atmospheric pressure; and/or
- before sealing the impermeable bag (4) introducing nitrogen N2 into the impermeable bag (4) so as to bring the amount of oxygen inside the impermeable bag (4) to below 6% of the total volume inside the sealed bag, preferably below 5%; and/or
- inserting into the impermeable bag (4) nitrogen N2 for a quantity at least 1.3 times greater than the volume of the impermeable bag (6); and/or
- rinsing the roasted coffee beans (3) present in the impermeable bag (4) with 2 cubic metres of nitrogen in a total sack volume (6) of 1500 litres filled up to 60-80% in volume with roasted beans; and/or
- preventing gas or fluids from entering the impermeable bag (4) by creating a barrier to oxygen that has an oxygen permeability of less than 0.1 cc(cubic centimetres=millilitres ml)/m²/24h at 23 °C 0% RH (relative humidity); and/or
- preventing gas or fluids from entering the impermeable bag (4) by creating a barrier to water vapour that has a water vapour permeability of less than 0.1 g/m²/24h at 38 °C 90% RH; and/or
- inserting the impermeable bag (4) in a protection and transport sack (15); and/or
- before inserting the impermeable bag (4), tying and closing the protection and transport sack bottom (15); and/or
- tying and closing, joining them, the impermeable bag mouth portion (10) and the protection and transport sack loading portion (20); and/or
- inserting the protection and transport sack (15) in a self-supporting container (24); for example of the octabin type; and/or
- verifying through the at least one window (32) of the self-supporting container (24) that the impermeable bag (4) is under pressure after it has been filled with coffee and sealed tight; and/or
- verifying through the at least one window (33) of the self-supporting container (24) that the oxygen in the impermeable bag (4) is less than 6% in volume of the impermeable bag (4) upon delivery of the assembly to its destination; and/or
- verifying through the at least one window (33) of the self-supporting container (24) that the oxygen in the impermeable bag (4) is less than 5% in volume of the impermeable bag (4) upon delivery of the assembly to its destination.

According to an embodiment, not claimed in the present invention, a method of packaging of roasted and ground coffee (3), comprises, not necessarily in the order listed here, at least the steps of:
- providing roasted and ground coffee (3);
- pouring ground coffee (3) in a flexible and sealable impermeable bag (4) in such a way that said ground coffee (3) is in the minimum amount of roasted coffee of 100 kg;
- inserting the impermeable bag (4) in a protection and transport sack (15).

According to an embodiment, not included in the present invention, a method comprises at least one or more of the further steps listed below:
inserting the impermeable bag (4) in a protection and transport sack (15) before pouring the ground coffee; and/or
- before pouring ground coffee (3), blowing air and/or nitrogen into the flexible and sealable impermeable bag (4) opening its inner volume to receive ground coffee beans (3); and/or
- pouring in said impermeable bag (6), in a single inner volume, 350 to 450 kg of roasted and ground coffee (3); and/or
- sealing said impermeable bag (4); and/or
- preventing gas or fluids from entering the impermeable bag (4); and/or
- creating a depression in said impermeable bag (4) of between -50 mbar and -400 mbar; and/or
- filtering during the creation of the inner depression in said impermeable bag (4) to prevent the ground coffee (3) from being aspirated during the formation of the depression; and/or
- preventing air from entering into the impermeable bag (4) during the creation of the depression in said impermeable bag (4); and/or
- adjusting the pressure inside the impermeable bag (4) so that it is between 10 and 60 mbar with respect to the external pressure; and/or
- inserting the protection and transport sack (15) in a self-supporting container (24).

According to an embodiment, a method comprises at least one or more of the further steps listed below:
- pouring into said impermeable bag (4) a quantity of roasted coffee occupying a minimum volume of at least 500 litres; and/or
- pouring into said impermeable bag (4) a quantity of roasted coffee occupying a volume varying from 1100 to 1600 litres; and/or
- pouring into said impermeable bag (4) a quantity of roasted coffee varying from 350 kg to 450 kg; and/or
- filling the impermeable bag (4) with roasted and ground coffee (3) for 60 to 80% of its inner volume of impermeable bag (6); and/or
- adjusting the pressure inside the impermeable bag (4) so that it is between 10 and 40 mbar with respect to external pressure or atmospheric pressure; and/or
- before sealing the impermeable bag (4) and before pouring the ground coffee (3), inserting air into the impermeable bag (4); and/or - before sealing the impermeable bag (4) and before pouring the ground coffee (3), inserting nitrogen N2 into the impermeable bag (4) so as to bring the amount of oxygen inside the impermeable bag (4) to below 6% of the total inner volume with bag sealed, preferably below 5%; and/or
- inserting into the impermeable bag (4) nitrogen N2 for a quantity at least 1.3 times greater than the volume of the impermeable bag (6); and/or
- washing the impermeable bag (4) with 2 cubic metres of nitrogen on a total bag volume (6) of 1500 litres to be filled to 60 to 80% by volume of the roasted and ground coffee; and/or
- preventing gas or fluids from entering the impermeable bag (4) by creating a barrier to oxygen which has an oxygen permeability of less than 0.1 cc(cubic centimetres=millilitres ml)/m²/24h at 23 °C 0% Rh (relative humidity); and/or
- preventing gas or fluids from entering the impermeable bag (4) by creating a barrier to water vapour that has a water vapour permeability of less than 0.1 g/m²/24h at 38 °C 90% RH; and/or
- before inserting the impermeable bag (4) in a protection and transport bag (15), knotting and closing the bottom of the protection and transport bag (15); and/or
- tying and closing, joining them, the impermeable bag mouth portion (10) and the protection and transport sack loading portion (20); and/or
- inserting the protection and transport sack (15) in a self-supporting container (24); for example of the octabin type; and/or
- checking through the at least one window (32) of the self-supporting container (24) that the impermeable bag (4) is under vacuum after it has been filled with coffee and sealed; and/or
- checking through the at least one window (33) of the self-supporting container (24) that the oxygen in the impermeable bag (4) is less than 6% by volume of the impermeable bag (4) at the time of use of the roasted and ground coffee (3), for example for consumption or, more probably, for a subsequent processing step; and/or
- checking through the at least one window (33) of the self-supporting container (24) that the oxygen in the impermeable bag (4) is less than 5% by volume of the impermeable bag (4) at the time of use of the roasted and ground coffee (3).

Below, we will describe a method of packaging roasted coffee beans according to an embodiment.

A method comprising the following steps in succession:
1) making from the die-cut the self-supporting container bottom (27) and self-supporting container walls (29), resting said container on a transport pallet (36);
2) closing the protection and transport sack (24) closing the protection and transport sack bottom (18) by means of a knot (22);
3) inserting the protection and transport sack (15) inside the self-supporting container (24);
4) attaching the handles (16), preferably four, of the protection and transport sack (15) to hooks (42) of a protection and transport sack support structure (41) placing the protection and transport sack loading opening (21) under the coffee filling hopper (43);
5) inserting the impermeable bag (4) inside the protection and transport sack (15) positioning the latter in such a way that the corners of the impermeable bag (4) are substantially aligned with the corners of the protection and transport sack (15);
6) blowing air or nitrogen into the impermeable bag (4) to allow its complete unfolding or inflation to form an accessible inner volume, making available the greatest possible filling volume;
7) tying the impermeable bag loading opening or mouth (11) to the filling hopper (43), by means of a locking strap (44) ;
8) pouring the roasted coffee (3) in the impermeable bag (4) through the filling hopper (43);
9) detaching the impermeable bag loading mouth (11) from the filling hopper (43) and proceeding to heat seal both sides of the impermeable bag loading mouth (11), leaving an insertion gap for the flushing nozzle (45) that allows the insertion of a flushing nozzle (39); flushing gaseous nitrogen in the inner volume of impermeable bag (6); or, alternatively, detaching the impermeable bag loading mouth (11) from the filling hopper (43) and proceeding to heat seal the impermeable bag loading mouth (11) 10) not included in the present invention, connecting an extraction system to a unidirectional fitting (100) provided in the impermeable bag (4), and creating an inner depression in said impermeable bag (4) comprised between -50 mbar and -400 mbar and/or connecting an aspiration system to a unidirectional fitting (100) provided in the impermeable bag (4) and creating an inner depression in said impermeable bag (4) until said impermeable bag no longer shows any change of shape or volume;
10) heat-sealing the gap (45) so that the impermeable bag (4) is sealed tight;
11) folding the impermeable bag loading mouth (11) and tying it with a common knot to the protection and transport sack (15) solidifying the protection and transport sack (15) and the impermeable bag (4);
12) fitting, or not, the self-supporting container lid (26), closing the self-supporting container (24).

According to an embodiment, even the following further steps can be added in succession, optionally and if necessary:
13) placing locking straps or bands (37) around the self-supporting container to seal the assembly (1) and/or wrapping it with stretchable film (38) to protect and stabilise the self-supporting container (24) placed on the pallet (36); and/or
   - verifying the over-pressure inflation of the impermeable bag (4) after a predefined time after filling with coffee beans (3) and sealing tight; and/or
   - performing the aforesaid check through the upper window (32); and/or after a predetermined time from 2h to 36h;
14) checking with a needle probe, for example of an instrument that measures the gaseous compositions in an environment, the oxygen present in the inner volume (6) of the impermeable bag (4), for example passing through the inspection window (33) and puncturing the stretchable film (38), protection and transport sack (15) and impermeable bag (4) in over-pressure; and/or
   - unloading the roasted coffee (3) by opening the self-supporting container (24), lifting the protection and transport sack (15) by means of the handles (16), opening the knot in the bottom of protection and transport sack (18) and cutting the impermeable bag bottom portion (9).

To the embodiments described above, a technician in the field, to satisfy contingent requirements, may make numerous modifications, adaptations and replacements of members with others functionally equivalent, without departing from the scope of the following claims.

According to an embodiment, the impermeable bag is closed by welding the flaps of its opening(s). This welding is referred to above as "heat-sealing". However, this welding can be carried out by sealing bar and/or induction thermal welding. For example, but not necessarily, for an automated industrial production of impermeable bags, induction welding could be a preferable technical solution.

### LIST OF REFERENCES

- 1: Packaging assembly
- 2: Coffee
- 3: Roasted beans and/or ground
- 4: Impermeable bag
- 5: Unidirectional valve
- 6: Inner volume of impermeable bag
- 7: Impermeable bag side wall portion
- 8: Heat-sealing of impermeable bag
- 9: Impermeable bag bottom portion
- 10: Impermeable bag mouth portion
- 11: Impermeable bag loading opening or mouth
- 12: Conical walls
- 13: Transverse dimension of side wall
- 14: Transverse dimension of loading mouth
- 15: Protection and transport sack
- 16: Loops or handles
- 17: Tubular protection and transport sack wall
- 18: Protection and transport sack bottom
- 19: Protection and transport sack unloading opening
- 20: Protection and transport sack loading portion
- 21: Protection and transport sack loading opening
- 22: Protection and transport sack closure
- 23: Protection and transport sack corners
- 24: Self-supporting container
- 25: Inner volume of self-supporting container
- 26: Self-supporting container lid
- 27: Self-supporting container bottom
- 28: Layer of corrugated cardboard
- 29: Walls of self-supporting container
- 30: Self-supporting container bottom edge
- 31: Self-supporting container lid edge
- 32: Upper inspection window
- 33: Lower inspection window
- 34: Upper edge of the wall
- 35: Lower edge of the wall
- 36: Transport pallet
- 37: Locking straps or bands
- 38: Stretchable film
- 39: Nitrogen and/or air flushing nozzle
- 40: Heat-sealer or welder
- 41: Protection and transport sack support structure
- 42: Hooks
- 43: Hopper
- 44: Strap locking the impermeable bag to the hopper
- 45: Flushing nozzle insertion gap
- 100: Unidirectional fitting for connecting the aspiration system for creating a vacuum;
- 101: System for creating a strong depression or so-called vacuum;
- X-X: longitudinal axis of the assembly and in particular to the impermeable bag, protection and transport sack and self-supporting container.

## Claims

1. Packaging assembly (1) for the transport or storage of roasted (3) coffee (2) beans, comprising:
- at least one impermeable bag (4), impermeable at least to oxygen and water vapour;
- said at least one impermeable bag (4) being flexible and sealable in a watertight manner to prevent the introduction of fluids or gases inside the impermeable bag (4);
wherein
- said at least one impermeable bag (4) internally delimits an impermeable bag inner volume (6);
wherein said impermeable bag inner volume (6) is a single volume comprising roasted and ground coffee (3);
- said assembly (5) also comprises at least one unidirectional valve (1) sealingly applied to said at least one impermeable bag (4) and that only allows gas to escape from the impermeable bag (4) preventing the entry of gas into the impermeable bag (4),
**characterised in that** the single volume comprising roasted and ground coffee is for at least 100kg;
wherein said at least one unidirectional valve (5) makes it possible to achieve an overpressure inside the impermeable bag (4) variable from 3 to 60 mbar;
wherein
- said assembly further comprises at least one protection and transport sack (15);
- said at least one protection and transport sack (15) is fitted over said at least one impermeable bag (4) for protection against the risk of damage of the impermeable bag (4) and to facilitate its handling;
- said at least one protection and transport sack (15) comprises a tubular protection and transport sack wall (17), as well as a protection and transport sack bottom (18) with closable protection and transport sack discharging or unloading opening (19) and a protection and transport sack loading portion (20) delimiting a closable protection and transport sack loading opening (21), mechanically closed,
- said at least one protection and transport sack (15) is flexible;
- said protection and transport sack (15) comprises loops or handles (16) suitable for handling the assembly (1).

2. Packaging assembly (1) according to claim 1, wherein
- said at least one unidirectional valve (5) allows creating an over-pressure inside the impermeable bag (4) variable from 10 to 60 a 60 mbar; and/or wherein
- said at least one unidirectional valve (5) allows creating an over-pressure inside the impermeable bag (4) variable from 3 to 9 mbar; and/or wherein
- said at least one impermeable bag (4) delimits internally an impermeable bag inner volume (6) of at least 500 litres; and/or wherein
- said impermeable bag (4) comprises at least one unidirectional valve (5), said valve allows creating an over-pressure inside the impermeable bag (4) variable from 10 to 40 mbar; and/or wherein
- said impermeable bag (4) comprises at least one unidirectional valve (5), said valve allows creating an over-pressure inside the impermeable bag (4) variable from 20 to 60 mbar; and/or wherein
- said impermeable bag (4) comprises at least one unidirectional valve (5), said valve allows creating an over-pressure inside the impermeable bag (4) variable from 10 to 60 mbar; and/or wherein
- said impermeable bag (4) comprises at least one unidirectional valve (5), said valve allows creating an over-pressure inside the impermeable bag (4) variable from 3 to 9 mbar; and/or wherein
- said at least one one-way valve (5) are at least two one-way valves (5) applied to said impermeable bag (4); and/or wherein
- said impermeable bag inner volume (6) is between 1100-1600 litres; and/or wherein
- said impermeable bag inner volume (6) is filled to 60% -80% in volume with roasted coffee beans (3); and/or wherein
- said impermeable bag inner volume (6) is filled with 350-450 kg of roasted coffee beans (3).

3. Packaging assembly (1) according to claim 1 or 2, wherein
- said impermeable bag (4) is a die cut; and/or wherein
- said impermeable bag (4) comprises an impermeable bag side wall portion (7); and/or wherein
- said impermeable bag side wall portion (7) has a cross-section, at a longitudinal extension (X-X) of the sack, of a quadrangular shape; and/or wherein
- said impermeable bag side wall portion (7) has four, flat lateral surfaces; and/or wherein
- said impermeable bag side wall portion (7) is a tubular shape; and/or wherein
- said impermeable bag side wall portion (7) has impermeable bag heat sealings (8) to delimit at least four corners; and/or wherein
- said impermeable bag (4) comprises an impermeable bag bottom portion (9); and/or wherein
- said impermeable bag (4) comprises a closable impermeable bag mouth portion (10) which defines an impermeable bag opening or loading mouth (11) for introducing roasted coffee beans (3) in the at least one impermeable bag (4); and/or wherein
- said at least one-way valve (5) is applied to said at least one impermeable bag side wall portion (7); and/or wherein
- said impermeable bag mouth portion (10) connects said side wall portion (7) to said loading mouth (11) by means of conical walls (12) having a linear shape (so as to facilitate the loading of roasted beans (3) preventing them from stopping or slowing down at the mouth of said impermeable bag (4); and/or wherein
- the angle between the extension of the side wall portion (7) and the linear conical wall mouth portion (12) is between 20° and 30°, preferably 25°; and/or wherein;
- a longitudinal axis (X-X) of the impermeable bag (4) passes through the loading mouth (11) and wherein, in an extended position of the impermeable bag (4), the transverse dimension of side wall (13) with a longitudinal axis (X-X) of the side wall portion (7) has a dimension at least three times the transverse dimension (14) of the loading mouth (11); and/or wherein
- said impermeable bag (4) is die-cut and comprises a plurality of walls (7, 9, 10) welded and/or heat-sealed together; and/or wherein
- said impermeable bag (4) has oxygen permeability less than 0.1 cubic centimetres/m²/24h at 23°C 0% RH (relative humidity); and/or wherein
- said impermeable bag (4) it has water vapour permeability lower than 0.1 gr/m²/24h at 38 °C and 90% RH.; and/or wherein
- said impermeable bag (4) comprises a polylaminate material body; and/or wherein
- said impermeable bag (4) comprises at least one wall (7, 9, 10) comprising at least one sheet of aluminium; and/or wherein
- said impermeable bag (4) comprises at least one wall comprising:
polyester 12 micro-metres thick,
aluminium 6.35 micro-metres thick
oriented polyamide 15 micro-metres thick
COEX polyethylene 110 micro-metres thick or a bi-oriented, co-extruded, polyethylene film 110 micro-metres thick; and/or wherein
- said sheets are polylaminated with polyurethane adhesive.

4. Packaging assembly (1) according to any of the previous claims, wherein:
- the assembly (1) comprises roasted coffee beans (3) placed inside the impermeable bag (4); and/or wherein
- the impermeable bag inner volume(6) is filled to 60-80% with roasted coffee beans (3); and/or wherein
- said impermeable bag (4) is filled with 350-450 kg of roasted coffee beans (3).

5. Packaging assembly (1) according to any of the previous claims, wherein:
- said inner volume of impermeable bag (6) contains nitrogen N2 in an amount such as to reduce the amount of oxygen inside the volume of impermeable bag; and/or wherein
- said impermeable bag inner volume(6) is rinsed with 2 cubic metres of nitrogen with the sack open so as to present washed roasted beans (3); and/or wherein
- said roasted beans (3) contained in said impermeable bag (4) are rinsed with nitrogen at least 3-4 times;
- said inner volume of impermeable bag (6), when sealed, contains nitrogen N2 in an amount such as to reduce the amount of oxygen to values lower than 6% in volume of the impermeable bag (4); and/or wherein
- with the impermeable bag sealed and containing roasted coffee beans (3), the amount of oxygen present in the impermeable bag inner volume (6) is less than 6% of the impermeable bag inner volume (6); and/or wherein
- with the impermeable bag sealed and containing roasted coffee beans (3), the amount of oxygen present in the impermeable bag inner volume (6) is less than 5% of the impermeable bag inner volume (6).

6. Packaging assembly (1) according to any of the previous claims, wherein:
- said assembly comprises at least one protection and transport sack (15); and/or wherein
- said at least one protection and transport sack (15) is fitted over said at least one impermeable bag (4) as protection against the risks of damaging the impermeable bag (4) and to facilitate its handling; and/or wherein
- said protection and transport sack (15) is a Flexible Intermediate Bulk Container, FIBC, for the transport of bulk items; and/or wherein
- said protection and transport sack (15) comprises loops or handles (16); and/or wherein
- said at least one inspection window (32, 33) is placed near the bottom edge of the wall (35); and/or wherein
- said protection and transport sack (15) comprises a tubular protection and transport sack wall (17); and/or comprises a protection and transport sack bottom (18) with a closable protection and transport sack discharging or unloading opening (19); and/or comprises a protection and transport sack loading portion (20) delimiting a closable protection and transport sack loading opening (21), preferably mechanically closable; and/or wherein
- said protection and transport sack (15)comprises a protection and transport sack closure (22), preferably a knot or a tie, tied around said protection and transport sack loading portion (20); and/or wherein
- said protection and transport sack (15) has a parallelepiped shape; and/or wherein
- said protection and transport sack (15) is in the shape of a cylinder; and/or wherein
- said protection and transport sack (15) comprises a longitudinal axis (X-X); and/or wherein
- said protection and transport sack (15) presents a cross-section to said longitudinal axis of a quadrangular shape; and/or wherein
- said handles (16) are provided near four corners of the protection and transport sack (23); and/or wherein
- said protection and transport sack (15) comprises a body in tubular fabric, preferably sewn defining corners (23); and/or wherein
- said protection and transport sack (15) comprises a body which comprises polypropylene; and/or wherein
- said protection and transport sack (15) comprises a body comprising fabric comprising polypropylene; and/or wherein
- said protection and transport sack (15) comprises a body which comprises at least a layer comprising polypropylene; and/or wherein
- said protection and transport sack (15) comprises a body which comprises at least a layer comprising raffia fabric; and/or wherein
- said protection and transport sack (15) comprises a body which comprises at least a layer comprising a jute and/or non-woven fabric.

7. Packaging assembly (1) according to any of the previous claims, wherein:
- the assembly (1) comprises at least one self-supporting container (24) defining a self-supporting container inner volume (25) closable, or avoiding to close it, with a self-supporting container lid (26) and a self-supporting container bottom (27) in which at least one impermeable bag (4) is inserted on which at least one protection and transport sack (15) is fitted; and/or wherein
- said self-supporting container (24) is of the OCTABIN type; and/or wherein
- said self-supporting container (24) is of the pallet size box type; and/or wherein
- said self-supporting container (24) is punched or die-cut; and/or wherein
- said self-supporting container (24) comprises a body comprising at least one corrugated cardboard layer (28); and/or wherein
- said self-supporting container (24) comprises die-cut self-supporting container walls (29); and/or wherein
- said self-supporting container walls (29) comprise glued joints, avoiding hooks or clips or staples; and/or wherein
- said self-supporting container (24) comprises a self-supporting container bottom (27) which comprises a self-supporting container bottom edge (30) folded into a self-supporting container walls (29) containment element; and/or wherein
- said self-supporting container walls (29) are inserted in said self-supporting container bottom (27) and rest thereon at the self-supporting container bottom edge (30); and/or wherein
- said self-supporting container (24) comprises a self-supporting container lid (27) which comprises a self-supporting container lid edge (30) folded into a self-supporting container walls (29) containment and closure element; and/or wherein
- avoids closing said self-supporting container (24) with a self-supporting container lid (26); and/or wherein
- said self-supporting container lid (26) is fitted to the self-supporting container walls (29); and/or wherein
- avoids fitting said self-supporting container lid (26) on the self-supporting container walls (29); and/or wherein
- at least one wall of the self-supporting container (29) comprises at least one inspection window (32, 33) forming a through opening; and/or wherein
- at least one of the self-supporting container walls (29) comprises at least two windows; and/or wherein
- said at least one inspection window (32, 33) is placed near the upper edge of the wall (34); and/or wherein
- said at least one inspection window (32, 33) is placed near a lower edge of the wall (35) near the self-supporting container bottom (27); and/or wherein
- said at least one window (32, 33) is placed 200-300 mm from the edge (34, 35) of the self-supporting container wall (29); and/or wherein
- said self-supporting container wall (29) comprises an upper window (32) and a lower window (33); and/or wherein
- said upper window (32) is used to test the tight sealing of the impermeable bag (4) containing the coffee in over-pressure; and/or wherein
- said lower window (33) is used to insert a needle probe into the protection and transport sack (15) and into the impermeable bag (4) and test the gases inside the impermeable bag (4); and/or wherein
- said packaging assembly (1) comprises at least one transport pallet (36) which the self-supporting container (24) rests on; and/or wherein
- said packaging assembly (1) comprises straps or blocking ties (37) which embrace said self-supporting container (24), closing it; and/or wherein
- said pallet straps (37) also embrace said transport pallet (36), making the assembly (1) integral and stabilising it; and/or wherein
- said packaging assembly (1) comprises at least one stretch film (38) wrapped around the self-supporting container (24) to protect, waterproof and stabilise it; and/or wherein
- said at least one stretch film (38) is also wrapped around the transport pallet (36) to support and stabilise the assembly (1); and/or wherein
- said self-supporting container wall (29) comprises an upper window (32) and a lower window (33); and/or wherein
- said upper window (32) is used to test the seal of the impermeable bag (4) containing the coffee under vacuum; and/or wherein
- said upper window (32) is used to test the tight sealing of the impermeable bag (4) containing the coffee in over-pressure; and/or wherein
- said lower window (33) is used to insert a needle probe into the protection and transport sack (15) and into the impermeable bag (4) and test the gases inside the impermeable bag (4); and/or wherein
- said packaging assembly (1) comprises at least one transport pallet (36) on which rests the protection and transport bag (15) within which the at least one impermeable bag (4) is inserted in which is placed roasted and ground coffee (3); and/or wherein
- said packaging assembly (1) comprises strapping, or locking bands (37), which embrace closing said protection and transport bag (15); and/or wherein
- said packaging assembly (1) comprises at least one stretchable film (38) wrapped around said protection and transport bag (15) to protect, waterproof and stabilise it.

8. A method for packaging roasted coffee beans (3) comprising the steps of:
- providing the roasted coffee beans (3);
- inflating air in a flexible impermeable bag (4) sealed tight;
- pouring the coffee beans (3) into a flexible impermeable bag (4) sealed tight;
- pouring into said impermeable bag (4) a quantity of roasted coffee of at least 100 kg;
- sealing said impermeable bag (4) tight;
- preventing gas or fluids from entering the impermeable bag (4) ;
- adjusting the pressure inside the impermeable bag (4) so that it is between 3 and 60 mbar with respect to the external pressure;
- inserting the impermeable bag (4) in a protection and transport sack (15) comprising a tubular protection and transport sack wall (17), as well as a protection and transport sack bottom (18) with closable protection and transport sack discharging or unloading opening (19) and a protection and transport sack loading portion (20) delimiting a closable protection and transport sack loading opening (21), mechanically closable,
wherein
- said at least one protection and transport sack (15) is flexible; and
- said protection and transport sack (15) comprises loops or handles (16) suitable for handling the assembly (1).

9. Method according to the claim 8, comprising the further steps of:
- pouring into said impermeable bag (4) a quantity of roasted coffee occupying a minimum volume of at least 500 litres; and/or
- pouring into said impermeable bag (4) a quantity of roasted coffee occupying a volume varying from 1100 to 1600 litres; and/or
- pouring into said impermeable bag (4) a quantity of roasted coffee varying from 350 kg to 450 kg; and/or
- filling the impermeable bag (4) with roasted coffee beans (3) up to 60-80% of the impermeable bag inner volume (6); and/or
- adjusting the pressure inside the impermeable bag (4) so that it is between 10 and 40 mbar with respect to external pressure or atmospheric pressure; and/or
- adjusting the pressure inside the impermeable bag (4) so that it is between 10 and 60 mbar with respect to external pressure or atmospheric pressure; and/or
- adjusting the pressure inside the impermeable bag (4) so that it is between 20 and 60 mbar with respect to external pressure or atmospheric pressure; and/or
- adjusting the pressure inside the impermeable bag (4) so that it is between 3 and 9 mbar with respect to external pressure or atmospheric pressure; and/or
- before sealing the impermeable bag (4) introducing nitrogen N2 into the impermeable bag (4) so as to bring the amount of oxygen inside the impermeable bag (4) to below 6% of the total volume inside the sealed bag, preferably below 5%; and/or
- inserting into the impermeable bag (4) nitrogen N2 for a quantity at least 1.3 times greater than the volume of the impermeable bag (6); and/or
- rinsing the roasted coffee beans (3) present in the impermeable bag (4) with 2 cubic metres of nitrogen in a total bag volume (6) of 1500 litres filled up to 60-80% in volume with roasted beans; and/or
- preventing gas or fluids from entering the impermeable bag (4) by creating a barrier to oxygen that has a permeability to oxygen lower than 0.1 cubic centimetre/m²/24h at 23 °C and 0% RH (relative humidity); and/or
- preventing gas or fluids from entering the impermeable bag (4) by creating a barrier to water vapour that has a water vapour permeability of less than 0.1 g/m²/24h at 38 °C 90% RH; and/or
- before inserting the impermeable bag (4), tying and closing the protection and transport sack bottom (15); and/or
- tying and closing, joining them, the impermeable bag mouth portion (10) and the protection and transport sack loading portion (20); and/or
- inserting the protection and transport sack (15) in a self-supporting container (24); for example of the octabin type; and/or
- verifying through the at least one window (32) of the self-supporting container (24) that the impermeable bag (4) is under pressure after it has been filled with coffee and sealed tight; and/or
- verifying through the at least one window (33) of the self-supporting container (24) that the oxygen in the impermeable bag (4) is less than 6% in volume of the impermeable bag (4) upon delivery of the assembly to destination; and/or
- verifying through the at least one window (33) of the self-supporting container (24) that the oxygen in the impermeable bag (4) is less than 5% in volume of the impermeable bag (4) upon delivery of the assembly to destination.

10. Method according to at least one of the claims 8 or 9, comprising the following steps in succession:
1) making from the die-cut the self-supporting container bottom (27) and self-supporting container walls (29) on a transport pallet (36);
2) closing the protection and transport sack (24) closing the protection and transport sack bottom (18) by means of a knot (22) ;
3) inserting the protection and transport sack (15) inside the self-supporting container (24);
4) attaching the handles (16) of the protection and transport sack (15) to hooks (42) of a protection and transport sack support structure (41) placing the protection and transport sack loading opening (21) under the coffee filling hopper (43);
5) inserting the impermeable bag (4) inside the protection and transport sack (15) positioning the latter in such a way that the corners of the impermeable bag (4) are aligned with the corners of the protection and transport sack (15);
6) tying the impermeable bag loading opening or mouth (11) to the filling hopper (43);
7) blowing air into the impermeable bag (4) to permit its inflation and make available the largest filling volume (6) possible;
8) filling the impermeable bag (4) with roasted coffee (3);
9) detaching the impermeable bag loading mouth (11) from the filling hopper (43) and proceeding to heat seal both sides of the impermeable bag loading mouth (11), leaving an insertion gap for the flushing nozzle (45) allowing the insertion of the flushing nozzle (39) and flushing gaseous nitrogen into the impermeable bag inner volume (6);
10) heat-sealing the gap (45) so that the impermeable bag (4) is tight;
11) folding the impermeable bag loading mouth (11) and tying it with a common knot to the protection and transport sack (15);
12) inserting the self-supporting container lid (26) closing the self-supporting container (24) or avoiding to insert the self-supporting container lid (26);
and/or wherein at least one of the following steps are present
- placing around the self-supporting container locking straps or bands (37) and sealing the assembly (1) by wrapping it with stretchable film (38) to protect and stabilise the self-supporting container (24) placed on the pallet (36);
and/or comprising at least one of the following activities:
- verifying the overpressure inflation of the impermeable bag (4) after a pre-set time from filling with coffee beans (3) and sealing tight; and/or proceeding with such check through the upper window (32); and/or wherein such check is carried out after a pre-set time varying from 2h to 36h; and/or comprising the following activity
- verifying by means of a needle probe, for example of a verification instrument of gaseous compositions in an environment, the oxygen present in the inner volume (6) of the impermeable bag (4); for example passing through an inspection window (33) and piercing the stretch film (38), protection and transport sack (15) and impermeable bag (4) in over-pressure; and/or providing for the following activity:
- unloading/discharging the roasted beans (3) opening the self-supporting container (24), lifting the protection and transport sack (15) using the handles (16), undoing the knot in the protection and transport sack bottom (18) and cutting the impermeable bag bottom portion (9).

## Patentansprüche

1. Verpackungsanordnung (1) für den Transport oder die Lagerung von gerösteten (3) Kaffee-(2)-Bohnen, umfassend:
- mindestens einen undurchlässigen Beutel (4), undurchlässig mindestens gegenüber Sauerstoff und Wasserdampf;
- wobei der mindestens eine undurchlässige Beutel (4) flexibel und wasserdicht verschließbar ist, um das Eindringen von Fluiden oder Gasen in den undurchlässigen Beutel (4) zu verhindern;
wobei
- der mindestens eine undurchlässige Beutel (4) im Inneren ein Innenvolumen (6) des undurchlässigen Beutels begrenzt; wobei das Innenvolumen (6) des undurchlässigen Beutels ein einzelnes Volumen umfassend gerösteten und gemahlenen Kaffee (3) ist;
- die Anordnung (5) auch mindestens ein unidirektionales Ventil (1) umfasst, das dicht an dem mindestens einen undurchlässigen Beutel (4) angebracht ist und das nur Entweichen von Gas aus dem undurchlässigen Beutel (4) zulässt, wobei das Eindringen von Gas in den undurchlässigen Beutel (4) verhindert wird, **dadurch gekennzeichnet, dass** das einzelne Volumen, umfassend gerösteten und gemahlenen Kaffee, für mindestens 100 kg ausgelegt ist;
wobei das unidirektionale Ventil (5) es ermöglicht, einen Überdruck, der von 3 bis 60 mbar variabel ist, im Inneren des undurchlässigen Beutels (4) zu erreichen;
wobei
- die Anordnung ferner mindestens einen Schutz- und Transportsack (15) umfasst;
- der mindestens eine Schutz- und Transportsack (15) über den mindestens einen undurchlässigen Beutel (4) zum Schutz des undurchlässigen Beutels (4) vor der Gefahr einer Beschädigung und zum Erleichtern seiner Handhabung angebracht ist;
- der mindestens eine Schutz- und Transportsack (15) eine schlauchförmige Schutz- und Transportsackwand (17), sowie einen Schutz- und Transportsackboden (18) mit verschließbarer Schutz- und Transportsack-Auslade- oder Entladeöffnung (19) und einen Schutz- und Transportsackladeabschnitt (20), der eine verschließbare Schutz- und Transportsackladeöffnung (21) begrenzt, mechanisch geschlossen, umfasst;
- der mindestens eine Schutz- und Transportsack (15) flexibel ist;
- der Schutz- und Transportsack (15) Schlaufen oder Griffe (16), geeignet für die Handhabung der Anordnung (1), umfasst.

2. Verpackungsanordnung (1) nach Anspruch 1, wobei
- das mindestens eine unidirektionale Ventil (5) Erzeugen eines Überdrucks, der von 10 bis 60 a 60 mbar variabel ist, im Inneren des undurchlässigen Beutels (4) erlaubt; und/oder wobei
- das mindestens eine unidirektionale Ventil (5) Erzeugen eines Überdrucks, der von 3 bis 9 mbar variabel ist, erlaubt; und/oder wobei
- der mindestens eine undurchlässige Beutel (4) im Inneren ein Innenvolumen (6) des undurchlässigen Beutels von mindestens 500 Litern begrenzt; und/oder wobei
- der undurchlässige Beutel (4) mindestens ein unidirektionales Ventil (5) umfasst, wobei das Ventil Erzeugen eines Überdrucks, der von 10 bis 40 mbar variabel ist, im Inneren des undurchlässigen Beutels (4) erlaubt; und/oder wobei
- der undurchlässige Beutel (4) mindestens ein unidirektionales Ventil (5) umfasst, wobei das Ventil Erzeugen eines Überdrucks, der von 20 bis 60 mbar variabel ist, im Inneren des undurchlässigen Beutels (4) erlaubt; und/oder wobei
- der undurchlässige Beutel (4) mindestens ein unidirektionales Ventil (5) umfasst, wobei das Ventil Erzeugen eines Überdrucks, der von 10 bis 60 mbar variabel ist, im Inneren des undurchlässigen Beutels (4) erlaubt; und/oder wobei
- der undurchlässige Beutel (4) mindestens ein unidirektionales Ventil (5) umfasst, wobei das Ventil Erzeugen eines Überdrucks, der von 3 bis 9 mbar variabel ist, im Inneren des undurchlässigen Beutels (4) erlaubt; und/oder wobei
- das mindestens eine Einwegventil (5) mindestens zwei Einwegventile (5) sind, die an dem undurchlässigen Beutel (4) angebracht sind; und/oder
- das Innenvolumen (6) des undurchlässigen Beutels (4) zwischen 1100 und 1600 Litern beträgt; und/oder wobei
- das Innenvolumen (6) des undurchlässigen Beutels (4) zu 60-80% des Volumens mit gerösteten Kaffeebohnen (3) gefüllt ist; und/oder wobei
- das Innenvolumen (6) des undurchlässigen Beutels mit 350-450 kg gerösteten Kaffeebohnen (3) gefüllt ist.

3. Verpackungsanordnung (1) nach Anspruch 1 oder 2, wobei
- der undurchlässige Beutel (4) gestanzt ist; und/oder wobei
- der undurchlässige Beutel (4) einen undurchlässigen Beutelseitenwandabschnitt (7) umfasst; und/oder wobei
- der undurchlässige Beutelseitenwandabschnitt (7) einen Querschnitt, bei einer Longitudinal-Ausdehnung (X-X) des Sacks, einer viereckigen Form aufweist; und/oder wobei
- der undurchlässige Beutelseitenwandabschnitt (7) vier flache Seitenflächen aufweist; und/oder wobei
- der undurchlässige Beutelseitenwandabschnitt (7) eine schlauchförmige Form aufweist; und/oder wobei
- der undurchlässige Beutelseitenwandabschnitt (7) undurchlässige Beutelheißsiegelungen (8) zur Begrenzung von mindestens vier Ecken aufweist; und/oder wobei
- der undurchlässige Beutel (4) einen undurchlässigen Beutelbodenabschnitt (9) umfasst; und/oder wobei
- der undurchlässige Beutel (4) einen verschließbaren undurchlässigen Beutelmündungsabschnitt (10) umfasst, der eine undurchlässige Beutelöffnung oder -lademündung (11) zum Einbringen von gerösteten Kaffeebohnen (3) in den mindestens einen undurchlässigen Beutel (4) definiert; und/oder wobei
- das mindestens eine Einwegventil (5) an dem mindestens einen undurchlässigen Beutelseitenwandabschnitt (7) angebracht ist; und/oder wobei
- der undurchlässige Beutelmündungsabschnitt (10) den Seitenwandabschnitt (7) mit der Lademündung (11) mittels konischer Wände (12) verbindet, die eine lineare Form aufweisen, um das Beladen mit gerösteten Bohnen (3) zu erleichtern, wobei diese daran gehindert werden, an der Mündung des undurchlässigen Beutels (4) zu stoppen oder zu verlangsamen; und/oder wobei
- der Winkel zwischen der Verlängerung des Seitenwandabschnitts (7) und dem linearen konischen Wandmündungsabschnitt (12) zwischen 20° und 30°, bevorzugt 25°, beträgt; und/oder wobei;
- eine Longitudinalachse (X-X) des undurchlässigen Beutels (4) durch die Lademündung (11) verläuft und wobei, in einer ausgefahrenen Position des undurchlässigen Beutels (4), die diagonale Abmessung der Seitenwand (13) mit einer Longitudinalachse (X-X) des Seitenwandabschnitts (7) eine Abmessung aufweist, die mindestens das Dreifache der diagonalen Abmessung (14) der Lademündung (11) beträgt; und/oder wobei
- der undurchlässige Beutel (4) gestanzt ist und eine Vielzahl von Wänden (7, 9, 10) aufweist, die miteinander verschweißt und/oder heißgesiegelt sind; und/oder wobei
- der undurchlässige Beutel (4) eine Sauerstoffdurchlässigkeit von weniger als 0,1 Kubikzentimeter/m²/24 h bei 23 °C, 0% RH (relative Feuchtigkeit) aufweist; und/oder wobei
- der undurchlässige Beutel (4) eine Wasserdampfdurchlässigkeit von weniger als 0,1 gr/m²/24 h bei 38 °C und 90% RH aufweist; und/oder wobei
- der undurchlässige Beutel (4) einen Körper aus Polylaminatmaterial umfasst; und/oder wobei
- der undurchlässige Beutel (4) mindestens eine Wand (7, 9, 10) aufweist, umfassend mindestens ein Aluminiumblech; und/oder wobei
- der undurchlässige Beutel (4) mindestens eine Wand umfasst, umfassend:
Polyester mit einer Dicke von 12 Mikrometern,
Aluminium mit einer Dicke von 6,35 Mikrometern,
orientiertes Polyamid mit einer Dicke von 15 Mikrometern
COEX-Polyethylen mit einer Dicke von 110 Mikrometern oder einen biorientierten, co-extrudierten Polyethylenfilm mit einer Dicke von 110 Mikrometern; und/oder wobei
- diese Bleche mit Polyurethan-Kleber polylaminiert sind.

4. Verpackungsanordnung (1) nach einem der vorhergehenden Ansprüche, wobei:
- die Anordnung (1) geröstete Kaffeebohnen (3) umfasst, die im Inneren des undurchlässigen Beutels (4) platziert sind; und/oder wobei
- das Innenvolumen (6) des undurchlässigen Beutels zu 60-80% mit gerösteten Kaffeebohnen (3) gefüllt ist; und/oder wobei
- der undurchlässige Beutel (4) mit 350-450 kg gerösteten Kaffeebohnen (3) gefüllt ist.

5. Verpackungsanordnung (1) nach einem der vorhergehenden Ansprüche, wobei:
- das Innenvolumen (6) des undurchlässigen Beutels Stickstoff N₂ in einer solchen Menge enthält, dass die Menge an Sauerstoff im Inneren des Volumens des undurchlässigen Beutels reduziert ist; und/oder wobei
- das Innenvolumen (6) des undurchlässigen Beutels mit 2 Kubikmetern an Stickstoff gespült ist, wobei der Sack offen ist, um gewaschene, geröstete Bohnen (3) zu präsentieren; und/oder wobei
- die gerösteten Bohnen (3), enthalten in dem undurchlässigen Beutel (4), mindestens 3-4 Mal mit Stickstoff gespült sind;
- das Innenvolumen (6) des undurchlässigen Beutels, wenn er versiegelt ist, Stickstoff N₂ in einer solchen Menge enthält, dass die Menge an Sauerstoff auf Werte von weniger als 6% des Volumens des undurchlässigen Beutels (4) reduziert ist; und/oder wobei
- die im Innenvolumen (6) des undurchlässigen Beutels vorhandene Sauerstoffmenge weniger als 6% des Innenvolumens (6) des undurchlässigen Beutels beträgt, wenn der undurchlässige Beutel versiegelt ist und geröstete Kaffeebohnen (3) enthält; und/oder wobei
- die im Innenvolumen (6) des undurchlässigen Beutels vorhandene Sauerstoffmenge weniger als 5% des Innenvolumens (6) des undurchlässigen Beutels beträgt, wenn der undurchlässige Beutel versiegelt ist und geröstete Kaffeebohnen (3) enthält.

6. Verpackungsanordnung (1) nach einem der vorhergehenden Ansprüche, wobei:
- die Anordnung mindestens einen Schutz- und Transportsack (15) umfasst; und/oder wobei
- der mindestens eine Schutz- und Transportsack (15) über mindestens einen undurchlässigen Beutel (4) zum Schutz des undurchlässigen Beutels (4) vor den Gefahren einer Beschädigung und zum Erleichtern seiner Handhabung angebracht ist; und/oder wobei
- der Schutz- und Transportsack (15) ein Flexibler Schüttgut-Zwischenbehälter (engl.: "Flexible Intermediate Bulk Container"), FIBC, zum Transport von Schüttgut ist; und/oder wobei
- der Schutz- und Transportsack (15) Schlaufen oder Griffe (16) aufweist; und/oder wobei
- das mindestens eine Sichtfenster (32, 33) in der Nähe des Bodenrandes der Wand (35) angeordnet ist; und/oder wobei
- der Schutz- und Transportsack (15) eine schlauchförmige Schutz- und Transportsackwand (17) umfasst; und/oder einen Schutz- und Transportsackboden (18) mit einer verschließbaren Schutz- und Transportsack-Auslade- oder Entladeöffnung (19) umfasst; und/oder einen Schutz- und Transportsackladeteil (20) umfasst, das eine verschließbare Schutz- und Transportsackladeöffnung (21), bevorzugt mechanisch verschließbar, begrenzt; und/oder wobei
- der Schutz- und Transportsack (15) einen Schutz- und Transportsackverschluss (22), bevorzugt einen Knoten oder eine Schnürung, geschnürt um das Schutz- und Transportsackladeteil (20), umfasst; und/oder wobei
- der Schutz- und Transportsack (15) eine parallelepipedische Form aufweist; und/oder wobei
- der Schutz- und Transportsack (15) eine zylindrische Form aufweist; und/oder wobei
- der Schutz- und Transportsack (15) eine Longitudinalachse (X-X) aufweist; und/oder wobei
- der Schutz- und Transportsack (15) einen Querschnitt zur Longitudinalsachse in viereckiger Form aufweist: und/oder wobei
- die Griffe (16) in der Nähe von vier Ecken des Schutz- und Transportsacks (23) vorgesehen sind; und/oder wobei
- der Schutz- und Transportsack (15) einen Körper aus schlauchförmigem Gewebe, bevorzugt genäht Ecken (23) definierend, umfasst; und/oder wobei
- der Schutz- und Transportsack (15) einen Körper, der Polypropylen umfasst, umfasst; und/oder wobei
- der Schutz- und Transportsack (15) einen Körper umfasst, der Gewebe, umfassend Polypropylen, umfasst; und/oder wobei
- der Schutz- und Transportsack (15) einen Körper umfasst, der mindestens eine Schicht, umfassend Polypropylen, umfasst; und/oder wobei
- der Schutz- und Transportsack (15) einen Körper umfasst, der mindestens eine Schicht, umfassend Bastgewebe, umfasst; und/oder wobei
- der Schutz- und Transportsack (15) einen Körper umfasst, der mindestens eine Schicht, umfassend Jute und/oder Vliesstoff, umfasst.

7. Verpackungsanordnung (1) nach einem der vorhergehenden Ansprüche, wobei:
- die Anordnung (1) mindestens einen selbsttragenden Behälter (24) umfasst, der ein Innenvolumen (25) des selbsttragenden Behälters definiert, verschließbar, oder vermeidend dieses zu verschließen, mit einem selbsttragenden Behälterdeckel (26) und einem selbsttragenden Behälterboden (27), in den mindestens ein undurchlässiger Beutel (4) eingebracht ist, auf den mindestens ein Schutz- und Transportsack (15) angebracht ist; und/oder wobei
- der selbsttragende Behälter (24) vom OCTABIN-Typ ist; und/oder wobei
- der selbsttragende Behälter (24) vom Palettenkisten-Typ ist; und/oder wobei
- der selbsttragende Behälter (24) gelocht oder gestanzt ist; und/oder wobei
- der selbsttragende Behälter (24) einen Körper umfasst, der mindestens eine Wellpappe-Schicht (28) umfasst; und/oder wobei
- der selbsttragende Behälter (24) gestanzte selbsttragende Behälterwände (29) umfasst; und/oder wobei
- die selbsttragenden Behälterwände (29) geklebte Verbindungen umfassen, um Haken oder Klemmen oder Klammern zu vermeiden; und/oder wobei
- der selbsttragende Behälter (24) einen selbsttragenden Behälterboden (27), der einen selbsttragenden Behälterbodenrand (30), gefaltet zu einem selbsttragenden Behälterwände-(29)-Aufnahmeelement, umfasst; und/oder wobei
- die selbsttragenden Behälterwände (29) in den selbsttragenden Behälterboden (27) eingebracht sind und an dem selbsttragenden Behälterbodenrand (30) auf diesem aufliegen; und/oder wobei
- der selbsttragende Behälter (24) einen selbsttragenden Behälterdeckel (27), der einen selbsttragenden Behälterdeckelrand (30), gefaltet zu einem selbsttragenden Behälterwände-(29)-Aufnahme- und Verschlusselement, umfasst; und/oder wobei
- Vermeiden des Verschließens des selbsttragenden Behälters (24) mit einem selbsttragenden Behälterdeckel (26); und/oder wobei
- der selbsttragende Behälterdeckel (26) an den selbsttragenden Behälterwänden (29) angebracht ist; und/oder wobei
- Vermeiden des Anbringens des selbsttragenden Behälterdeckels (26) an den selbsttragenden Behälterwänden (29); und/oder wobei
- mindestens eine Wand des selbsttragenden Behälters (29) mindestens ein Sichtfenster (32, 33), das eine Durchgangsöffnung bildet, umfasst; und/oder wobei
- mindestens eine der selbsttragenden Behälterwände (29) mindestens zwei Fenster umfasst; und/oder wobei
- das mindestens eine Sichtfenster (32, 33) in der Nähe eines oberen Randes der Wand (34) platziert ist; und/oder wobei
- das mindestens eine Sichtfenster (32, 33) in der Nähe eines unteren Randes der Wand (35) in der Nähe des selbsttragenden Behälterbodens (27) platziert ist; und/oder wobei
- das mindestens eine Fenster (32, 33) 200-300 mm von dem Rand (34, 35) der selbsttragenden Behälterwand (29) platziert ist; und/oder wobei
- die selbsttragende Behälterwand (29) ein oberes Fenster (32) und ein unteres Fenster (33) umfasst; und/oder wobei
- das obere Fenster (32) dazu dient, den dichten Verschluss des undurchlässigen Beutels (4), der den Kaffee enthält, unter Überdruck zu testen; und/oder wobei
- das untere Fenster (33) dazu dient, eine Nadelsonde in den Schutz- und Transportsack (15) und in den undurchlässigen Beutel (4) einzuführen und die Gase im Inneren des undurchlässigen Beutels (4) zu testen; und/oder wobei
- die Verpackungsanordnung (1) mindestens eine Transportpalette (36), auf die der selbsttragende Behälter (24) ruht, umfasst; und/oder wobei
- die Verpackungsanordnung (1) Riemen oder Blockierbänder (37), die den selbsttragenden Behälter (24) umschließen, ihn verschließen, umfasst; und/oder wobei
- die Palettenriemen (37) auch die Transportpalette (36) umschließen, die die Anordnung (1) integral machen und diese stabilisieren; und/oder wobei
- die Verpackungsanordnung (1) mindestens einen Dehnungsfilm (38) umfasst, der um den selbsttragenden Behälter (24) gewickelt ist, um ihn zu schützen, wasserdicht zu machen und zu stabilisieren; und/oder wobei
- der mindestens eine Dehnungsfilm (38) auch um die Transportpalette (36) gewickelt ist, um die Anordnung (1) zu stützen und zu stabilisieren; und/oder wobei
- die selbsttragende Behälterwand (29) ein oberes Fenster (32) und ein unteres Fenster (33) umfasst; und/oder wobei
- das obere Fenster (32) dazu dient, die Dichtigkeit des undurchlässigen Beutels (4), der den Kaffee enthält, unter Vakuum zu testen; und/oder wobei
- das obere Fenster (32) dazu dient, den dichten Verschluss des undurchlässigen Beutels (4), der den Kaffee enthält, bei Überdruck zu testen; und/oder wobei
- das untere Fenster (33) dazu dient, eine Nadelsonde in den Schutz- und Transportsack (15) und in den undurchlässigen Beutel (4) einzuführen und die Gase im Inneren des undurchlässigen Beutels (4) testen; und/oder wobei
- die Verpackungsanordnung (1) mindestens eine Transportpalette (36) umfasst, auf der der Schutz- und Transportbeutel (15) ruht, innerhalb welchen der mindestens eine undurchlässige Beutel (4) eingebracht ist, in dem gerösteter und gemahlener Kaffee (3) platziert ist; und/oder wobei
- die Verpackungsanordnung (1) Riemen- oder Verschlussbänder (37) umfasst, die den Schutz- und Transportbeutel (15) umschließen; und/oder wobei
- die Verpackungsanordnung (1) mindestens einen dehnbaren Film (38) umfasst, der um den Schutz- und Transportbeutel (15) gewickelt ist, um diesen zu schützen, wasserdicht zu machen und zu stabilisieren.

8. Verfahren zum Verpacken von gerösteten Kaffeebohnen (3), umfassend die Schritte:
- Bereitstellen der gerösteten Kaffeebohnen (3);
- Einblasen von Luft in einen flexiblen, dicht verschlossenen undurchlässigen Beutel (4);
- Einfüllen der Kaffeebohnen (3) in einen flexiblen, dicht verschlossenen undurchlässigen Beutel (4);
- Einfüllen einer Menge an gerösteten Kaffee von mindestens 100 kg in den undurchlässigen Beutel (4)
- dichtes Verschließen des undurchlässigen Beutels (4);
- Verhindern des Eindringens von Gas oder Fluiden in den undurchlässigen Beutel (4);
- Einstellen des Drucks im Inneren des undurchlässigen Beutels
- (4), sodass er zwischen 3 und 60 mbar in Bezug auf den Außendruck liegt;
- Einbringen des undurchlässigen Beutels (4) in einen Schutz- und Transportsack (15), umfassend eine schlauchförmige Schutz- und Transportsackwand (17), sowie einen Schutz- und Transportwandsackboden (18) mit verschließbarer Schutz- und Transportsack-Auslade- oder Entladeöffnung (19) und einem Schutz- und Transportsackladeteil (20), das eine verschließbare Schutz- und Transportsackladeöffnung (21) begrenzt, mechanisch verschließbar, wobei
- der mindestens eine Schutz- und Transportsack (15) flexibel ist; und
- der Schutz- und Transportsack (15) Schlaufen oder Griffe (16), die zur Handhabung der Anordnung (1) geeignet sind, umfasst.

9. Verfahren nach Anspruch 8, umfassend die weiteren Schritte:
- Einfüllen einer Menge an gerösteten Kaffee in den undurchlässigen Beutel (4), die ein Mindestvolumen von mindestens 500 Litern einnimmt; und/oder
- Einfüllen einer Menge an gerösteten Kaffee in den undurchlässigen Beutel (4), die ein Volumen, variierend von 1100 bis 1600 Litern, einnimmt; und/oder
- Einfüllen einer Menge an gerösteten Kaffee, variierend von 350 kg bis 450 kg, in den undurchlässigen Beutel (4); und/oder
- Befüllen des undurchlässigen Beutels (4) mit gerösteten Kaffeebohnen (3) bis zu 60-80% des Innenvolumens (6) des undurchlässigen Beutels; und/oder
- Einstellen des Drucks im Inneren des undurchlässigen Beutels (4), sodass dieser zwischen 10 und 40 mbar in Bezug auf den Außendruck oder atmosphärischem Druck liegt; und/oder
- Einstellen des Drucks im Inneren des undurchlässigen Beutels (4), sodass dieser zwischen 10 und 60 mbar in Bezug auf den Außendruck oder atmosphärischen Druck liegt; und/oder
- Einstellen des Drucks im Inneren des undurchlässigen Beutels (4), sodass dieser zwischen 20 und 60 mbar in Bezug auf den Außendruck oder atmosphärischen Druck liegt; und/oder
- Einstellen des Drucks im Inneren des undurchlässigen Beutels (4), sodass dieser zwischen 3 und 9 mbar in Bezug auf den Außendruck oder atmosphärischen Druck liegt; und/oder
- Einleiten von Stickstoff N₂ in den undurchlässigen Beutel (4) vor Versiegeln des undurchlässigen Beutels (4), um die Menge an Sauerstoff im Inneren des undurchlässigen Beutels (4) auf unter 6% des Gesamtvolumens im Inneren des versiegelten Beutels, bevorzugt unter 5%, zu senken; und/oder
- Einbringen von Stickstoff N₂ in den undurchlässigen Beutel (4) in einer Menge, die mindestens 1 ,3-mal größer ist als das Volumen des undurchlässigen Beutels (6); und/oder
- Spülen der gerösteten Kaffeebohnen (3), die sich im undurchlässigen Beutel (4) befinden, mit 2 Kubikmetern Stickstoff in einem Gesamtbeutelvolumen (6) von 1500 Litern, gefüllt bis zu 60-80% an Volumen mit gerösteten Bohnen; und/oder
- Verhindern des Eindringens von Gas oder Fluiden in den undurchlässigen Beutel (4) durch Erzeugen einer Barriere für Sauerstoff, die eine Sauerstoffpermeabilität von weniger als 0,1 Kubikzentimeter/m²/24 h bei 23 °C und 0% RH (relative Feuchtigkeit) aufweist; und/oder
- Verhindern des Eindringens von Gas oder Fluiden in den undurchlässigen Beutel (4) durch Erzeugen einer Barriere für Wasserdampf, die eine Wasserdampfdurchlässigkeit von weniger als 0,1 g/m²/24 h bei 38 °C und 90% RH aufweist, und/oder
- vor dem Einbringen des undurchlässigen Beutels (4), Binden und Verschließen des Schutz- und Transportsackbodens (15); und/oder
- Binden und Verschließen des undurchlässigen Beutelmündungsteils (10) und des Schutz- und Transportsack-Ladeteils (20), wobei sie miteinander verbunden werden; und/oder
- Einbringen des Schutz- und Transportsacks (15) in einen selbsttragenden Behälter (24), z. B. vom Octabin-Typ; und/oder
- Überprüfen durch das mindestens eine Fenster (32) des selbsttragenden Behälters (24), dass der undurchlässige Beutel (4) unter Druck steht, nachdem er mit Kaffee gefüllt und dicht verschlossen wurde; und/oder
- Überprüfen durch das mindestens eine Fenster (33) des selbsttragenden Behälters (24), dass der Sauerstoff im undurchlässigen Beutel (4) weniger als 6% des Volumens des undurchlässigen Beutels (4) bei Anlieferung der Anordnung am Bestimmungsort aufweist; und/oder
- Überprüfen durch das mindestens eine Fenster (33) des selbsttragenden Behälters (24), dass der Sauerstoff im undurchlässigen Beutel (4) weniger als 5% des Volumens des undurchlässigen Beutels (4) bei Anlieferung der Anordnung am Bestimmungsort aufweist.

10. Verfahren nach mindestens einem der Ansprüche 8 oder 9, umfassend nacheinander die folgenden Schritte:
1) Herstellen des selbsttragenden Behälterbodens (27) und der selbsttragenden Behälterwände (29) aus einer Stanzung auf einer Transportpalette (36);
2) Schließen des Schutz- und Transportsacks (24), wobei der Schutz- und Transportsackboden (18) mittels eines Knotens (22) geschlossen wird;
3) Einbringen des Schutz- und Transportsacks (15) ins Innere des selbsttragenden Behälters (24);
4) Anbringen der Griffe (16) des Schutz- und Transportsacks (15) an Haken (42) einer Schutz- und Transportsack-Tragestruktur (41), die die Schutz- und Transportsackladeöffnung (21) unter den Kaffee-Einfülltrichter (43) platziert;
5) Einbringen des undurchlässigen Beutels (4) in den Schutz- und Transportsack (15), wobei der letztgenannte so positioniert wird, dass die Ecken des undurchlässigen Beutels (4) auf die Ecken des Schutz- und Transportsacks (15) ausgerichtet sind;
6) Binden der undurchlässigen Beutelladeöffnung oder -mündung (11) an den Fülltrichter (43);
7) Einblasen von Luft in den undurchlässigen Beutel (4), um seine Aufblähung zu ermöglichen und das größtmögliche Füllvolumen (6) bereitzustellen;
8) Befüllen des undurchlässigen Beutels (4) mit geröstetem Kaffee (3);
9) Abnehmen der undurchlässigen Beutellademündung (11) vom Fülltrichter (43) und Fortsetzen des Heißsiegelns beider Seiten der undurchlässigen Beutelmündung (11), wobei ein Einführspalt für die Spüldüse (45) verbleibt, der das Einbringen der Spüldüse (39) und das Spülen von gasförmigem Stickstoff in das Innenvolumen (6) des undurchlässigen Beutels ermöglicht;
10) Heißsiegeln des Spalts (45), so dass der undurchlässige Beutel (4) dicht wird;
11) Falten der undurchlässigen Beutellademündung (11) und Binden dieser an den Schutz- und Transportsack (15) mit einem gewöhnlichen Knoten;
12) Einbringen des selbsttragenden Behälterdeckels (26), der den selbsttragenden Behälter (24) schließt oder Vermeiden des Einbringens des selbsttragenden Behälterdeckels (26);
und/oder wobei mindestens einer der folgenden Schritte vorhanden ist
- Anbringen von Verschlussriemen oder -bändern (37) um den selbsttragenden Behälter und Versiegeln der Anordnung (1) durch Umwickeln mit einem dehnbaren Film (38), um den selbsttragenden Behälter (24), platziert auf der Palette (36), zu schützen und zu stabilisieren.
und/oder umfassend mindestens eine der folgenden Tätigkeiten:
- Überprüfen der Überdruck-Aufblähung des undurchlässigen Beutels (4) nach einer voreingestellten Zeit ab dem Einfüllen der Kaffeebohnen (3) und dem dichten Verschließen; und/oder Weiterführen einer solchen Prüfung durch das obere Fenster (32); und/oder wobei eine solche Prüfung nach einer voreingestellten Zeit, variierend von 2 h bis 36 h, durchgeführt wird; und/oder die folgende Tätigkeit umfasst
- Überprüfen mittels einer Nadelsonde, z. B. von einem Prüfgerät für gasförmige Zusammensetzungen in einer Umgebung, den im Innenvolumen (6) des undurchlässigen Beutels (4) vorhandenen Sauerstoffs; z.B. durchgehend durch ein Sichtfenster (33) und durchstechend den Dehnungsfilm (38), Schutz- und Transportsack (15) und undurchlässigen Beutel (4) bei Überdruck;
und/oder die folgende Tätigkeit vorsieht:
- Ausladen/Entladen der gerösteten Bohnen (3) beim Öffnen des selbsttragenden Behälters (24), Anheben des Schutz- und Transportsacks (15) unter Verwendung der Griffe (16), Lösen des Knotens im Schutz- und Transportsackboden (18) und Abschneiden des undurchlässigen Beutelbodenteils (9).

## Revendications

1. Ensemble emballage (1) pour le transport ou le stockage de grains de café (2) torréfiés (3), comprenant :
- au moins une poche imperméable (4), imperméable au moins à l'oxygène et à la vapeur d'eau ;
- ladite au moins une poche imperméable (4) étant flexible et pouvant être hermétiquement fermée d'une manière étanche à l'eau pour empêcher l'introduction de fluides ou de gaz à l'intérieur de la poche imperméable (4) ;
- ladite au moins une poche imperméable (4) délimitant intérieurement un volume intérieur (6) de poche imperméable ;
ledit volume intérieur (6) de poche imperméable étant un volume unique comprenant du café moulé et torréfié (3) ;
- ledit ensemble (5) comprenant également au moins une valve unidirectionnelle (1) appliquée de manière étanche à ladite au moins une poche imperméable (4) et qui permet uniquement au gaz de s'échapper de la poche imperméable (4) empêchant l'entrée de gaz dans la poche imperméable (4),
**caractérisé en ce que** le volume unique comprenant du café moulu et torréfié est pour au moins 100 kg ;
ladite au moins une valve unidirectionnelle (5) permettant d'obtenir une surpression à l'intérieur de la poche imperméable (4) variable de 3 à 60 mbar ;
- ledit ensemble comprenant en outre au moins un sac de protection et de transport (15) ;
- ledit au moins un sac de protection et de transport (15) étant installé par-dessus ladite au moins une poche imperméable (4) pour une protection contre le risque d'endommagement de la poche imperméable (4) et pour faciliter sa manipulation ;
- ledit au moins un sac de protection et de transport (15) comprenant une paroi tubulaire (17) de sac de protection et de transport, ainsi qu'un fond (18) de sac de protection et de transport avec une ouverture d'évacuation ou déchargement (19) de sac de protection et de transport pouvant être fermée et une partie de chargement (20) de sac de protection et de transport délimitant une ouverture de chargement (21) de sac de protection et de transport pouvant être fermée, mécaniquement fermée,
- ledit au moins un sac de protection et de transport (15) étant flexible ;
- ledit sac de protection et de transport (15) comprenant des boucles ou poignées (16) appropriées pour manipuler l'ensemble (1).

2. Ensemble emballage (1) selon la revendication 1,
- ladite au moins une valve unidirectionnelle (5) permettant de créer une surpression à l'intérieur de la poche imperméable (4) variable de 10 à 60 mbar ; et/ou
- ladite au moins une valve unidirectionnelle (5) permettant de créer une surpression à l'intérieur de la poche imperméable (4) variable de 3 à 9 mbar ; et/ou
- ladite au moins une poche imperméable (4) délimitant intérieurement un volume intérieur (6) de poche imperméable d'au moins 500 litres ; et/ou
- ladite poche imperméable (4) comprenant au moins une valve unidirectionnelle (5), ladite valve permettant de créer une surpression à l'intérieur de la poche imperméable (4) variable de 10 à 40 mbar ; et/ou
- ladite poche imperméable (4) comprenant au moins une valve unidirectionnelle (5), ladite valve permettant de créer une surpression à l'intérieur de la poche imperméable (4) variable de 20 à 60 mbar ; et/ou
- ladite poche imperméable (4) comprenant au moins une valve unidirectionnelle (5), ladite valve permettant de créer une surpression à l'intérieur de la poche imperméable (4) variable de 10 à 60 mbar ; et/ou
- ladite poche imperméable (4) comprenant au moins une valve unidirectionnelle (5), ladite valve permettant de créer une surpression à l'intérieur de la poche imperméable (4) variable de 3 à 9 mbar ; et/ou
- ladite au moins une valve unidirectionnelle (5) étant au moins deux valves unidirectionnelles (5) appliquées à ladite poche imperméable (4) ; et/ou
- ledit volume intérieur (6) de poche imperméable se situant entre 1 100 et 1 600 litres ; et/ou
- ledit volume intérieur (6) de poche imperméable étant rempli à 60 %-80 % en volume de grains de café torréfiés (3) ; et/ou
- ledit volume intérieur (6) de poche imperméable étant rempli par 350-450 kg de grains de café torréfiés (3).

3. Ensemble emballage (1) selon la revendication 1 ou 2,
- ladite poche imperméable (4) étant une découpe ; et/ou
- ladite poche imperméable (4) comprenant une partie paroi latérale (7) de poche imperméable ; et/ou
- ladite partie paroi latérale (7) de poche imperméable présentant une section transversale, au niveau d'une extension longitudinale (X-X) du sac, d'une forme quadrangulaire ; et/ou
- ladite partie paroi latérale (7) de poche imperméable comprenant quatre surfaces latérales plates ; et/ou
- ladite partie paroi latérale (7) de poche imperméable étant une forme tubulaire ; et/ou
- ladite partie paroi latérale (7) de poche imperméable comprenant des thermosoudures (8) de poche imperméable pour délimiter au moins quatre coins ; et/ou
- ladite poche imperméable (4) comprenant une partie fond (9) de poche imperméable ; et/ou
- ladite poche imperméable (4) comprenant une partie embouchure (10) de poche imperméable pouvant être fermée qui définit une ouverture ou embouchure de chargement (11) de poche imperméable pour introduire des grains de café torréfiés (3) dans ladite au moins une poche imperméable (4) ; et/ou
- ladite au moins une valve unidirectionnelle (5) étant appliquée à ladite au moins une partie paroi latérale (7) de poche imperméable ; et/ou
- ladite partie embouchure (10) de poche imperméable reliant ladite partie paroi latérale (7) à ladite embouchure de chargement (11) à l'aide de parois coniques (12) présentant une forme linéaire (de manière à faciliter le chargement de grains torréfiés (3) les empêchant de s'arrêter ou de ralentir à l'embouchure de ladite poche imperméable (4) ; et/ou
- l'angle entre l'extension de la partie paroi latérale (7) et la partie embouchure à paroi conique linéaire (12) se situant entre 20° et 30°, de préférence 25° ; et/ou
- un axe longitudinal (X-X) de la poche imperméable (4) passant à travers l'embouchure de chargement (11) et, dans une position étendue de la poche imperméable (4), la dimension transversale de paroi latérale (13) avec un axe longitudinal (X-X) de la partie paroi latérale (7) ayant une dimension faisant au moins trois fois la dimension transversale (14) de l'embouchure de chargement (11) ; et/ou
- ladite poche imperméable (4) étant une découpe et comprend une pluralité de parois (7, 9, 10) soudées et/ou thermoscellées ensemble ; et/ou
- ladite poche imperméable (4) présentant une perméabilité à l'oxygène inférieure à 0,1 centimètre cube/m²/24h à 23 °C et 0 % de RH (humidité relative) ; et/ou
- ladite poche imperméable (4) présentant une perméabilité à la vapeur d'eau inférieure à 0,1 gr/m²/24h à 38 °C et 90 % de RH ; et/ou
- ladite poche imperméable (4) comprenant un corps en matériau polymère ; et/ou
- ladite poche imperméable (4) comprenant au moins une paroi (7, 9, 10) comprenant au moins une feuille d'aluminium ; et/ou
- ladite poche imperméable (4) comprenant au moins une paroi comprenant :
du polyester épais de 12 micromètres,
de l'aluminium épais de 6,35 micromètres
du polyamide orienté épais de 15 micromètres
du polyéthylène COEX épais de 110 micromètres ou un film de polyéthylène coextrudé, biorienté épais de 110 micromètres ; et/ou
- lesdites feuilles étant polystratifiées avec un adhésif de polyuréthane.

4. Ensemble emballage (1) selon l'une quelconque des revendications précédentes,
- l'ensemble (1) comprenant des grains de café torréfiés (3) placés à l'intérieur de la poche imperméable (4) ; et/ou
- le volume intérieur (6) de poche imperméable étant rempli à 60-80 % de grains de café torréfiés (3) ; et/ou
- ladite poche imperméable (4) étant remplie par 350-450 kg de grains de café torréfiés (3).

5. Ensemble emballage (1) selon l'une quelconque des revendications précédentes,
- ledit volume intérieur (6) de poche imperméable contenant de l'azote N2 en une quantité de manière à réduire la quantité d'oxygène à l'intérieur du volume de poche imperméable ; et/ou
- ledit volume intérieur (6) de poche imperméable étant rincé avec 2 mètres cubes d'azote avec le sac ouvert de manière à présenter des grains torréfiés (3) lavés ; et/ou
- lesdits grains torréfiés (3) contenus dans ladite poche imperméable (4) étant rincés avec de l'azote au moins 3-4 fois ;
- ledit volume intérieur (6) de poche imperméable, quand elle est hermétiquement fermée, contenant de l'azote N2 en une quantité de manière à réduire la quantité d'oxygène à des valeurs inférieures à 6 % en volume de la poche imperméable (4) ; et/ou
- avec la poche imperméable hermétiquement fermée et contenant des grains de café torréfiés (3), la quantité d'oxygène présente dans le volume intérieur (6) de poche imperméable étant inférieure à 6 % du volume intérieur (6) de poche imperméable ; et/ou
- avec la poche imperméable hermétiquement fermée et contenant des grains de café torréfiés (3), la quantité d'oxygène présente dans le volume intérieur (6) de poche imperméable étant inférieure à 5 % du volume intérieur (6) de poche imperméable.

6. Ensemble emballage (1) selon l'une quelconque des revendications précédentes,
- ledit ensemble comprenant au moins un sac de protection et de transport (15) ; et/ou
- ledit au moins un sac de protection et de transport (15) étant installé par-dessus ladite au moins une poche imperméable (4) comme protection contre les risques d'endommagement de la poche imperméable (4) et pour faciliter sa manipulation ; et/ou
- ledit sac de protection et de transport (15) étant un contenant intermédiaire flexible pour vrac, FIBC, pour le transport d'articles en vrac ; et/ou
- ledit sac de protection et de transport (15) comprenant des boucles ou poignées (16) ; et/ou
- ladite au moins une fenêtre d'inspection (32, 33) étant placée près du bord de fond de la paroi (35) ; et/ou
- ledit sac de protection et de transport (15) comprenant une paroi tubulaire (17) de sac de protection et de transport ; et/ou comprenant un fond (18) de sac de protection et de transport avec une ouverture d'évacuation ou déchargement (19) de sac de protection et de transport pouvant être fermée ; et/ou comprenant une partie de chargement (20) de sac de protection et de transport délimitant une ouverture de chargement (21) de sac de protection et de transport pouvant être fermée, pouvant être mécaniquement fermée ; et/ou
- ledit sac de protection et de transport (15) comprenant une fermeture (22) de sac de protection et de transport, de préférence un noeud ou une attache, attaché autour de ladite partie de chargement (20) de sac de protection et de transport ; et/ou
- ledit sac de protection et de transport (15) présentant une forme de parallélépipède ; et/ou
- ledit sac de protection et de transport (15) se présentant sous la forme d'un cylindre ; et/ou
- ledit sac de protection et de transport (15) comprenant un axe longitudinal (X-X) ; et/ou
- ledit sac de protection et de transport (15) présentant une section transversale par rapport audit axe longitudinal d'une forme quadrangulaire ; et/ou
- lesdites poignées (16) étant disposées près des quatre coins du sac de protection et de transport (23) ; et/ou
- ledit sac de protection et de transport (15) comprenant un corps en tissu tubulaire, de préférence cousu définissant des coins (23) ; et/ou
- ledit sac de protection et de transport (15) comprenant un corps qui comprend du polypropylène ; et/ou
- ledit sac de protection et de transport (15) comprenant un corps comprenant du tissu comprenant du polypropylène ; et/ou
- ledit sac de protection et de transport (15) comprenant un corps qui comprend au moins une couche comprenant du polypropylène ; et/ou
- ledit sac de protection et de transport (15) comprenant un corps qui comprend au moins une couche comprenant du raphia ; et/ou
- ledit sac de protection et de transport (15) comprenant un corps qui comprend au moins une couche comprenant un jute et/ou un tissu non tissé.

7. Ensemble emballage (1) selon l'une quelconque des revendications précédentes,
- l'ensemble (1) comprenant au moins un contenant autoportant (24) définissant un volume intérieur (25) de contenant autoportant pouvant être fermé, ou évitant de le fermer, avec un couvercle (26) de contenant autoportant et un fond (27) de contenant autoportant dans lequel est insérée au moins une poche imperméable (4) sur laquelle est installé au moins un sac de protection et de transport (15) ; et/ou
- ledit contenant autoportant (24) étant du type OCTABIN ; et/ou
- ledit contenant autoportant (24) étant du type boîte de la taille d'une palette ; et/ou
- ledit contenant autoportant (24) étant perforé ou découpé ; et/ou
- ledit contenant autoportant (24) comprenant un corps comprenant au moins une couche en carton ondulé (28) ; et/ou
- ledit contenant autoportant (24) comprenant des parois (29) de contenant autoportant découpées ; et/ou
- lesdites parois (29) de contenant autoportant comprenant des raccords collés, évitant crochets ou pinces ou agrafes ; et/ou
- ledit contenant autoportant (24) comprenant un fond (27) de contenant autoportant qui comprend un bord (30) de fond de contenant autoportant plié dans un élément de confinement de parois (29) de contenant autoportant ; et/ou
- lesdites parois (29) de contenant autoportant étant insérées dans ledit fond (27) de contenant autoportant et reposent sur celui-ci au niveau du bord (30) de fond de contenant autoportant ; et/ou
- ledit contenant autoportant (24) comprenant un couvercle (27) de contenant autoportant qui comprend un bord (30) de couvercle de contenant autoportant plié dans un élément de confinement et de fermeture de parois (29) de contenant autoportant ; et/ou
- évitant la fermeture dudit contenant autoportant (24) avec un couvercle (26) de contenant autoportant ; et/ou
- ledit couvercle (26) de contenant autoportant étant installé sur les parois (29) de contenant autoportant ; et/ou
- évitant l'installation dudit couvercle (26) de contenant autoportant sur les parois (29) de contenant autoportant ; et/ou
- au moins une paroi du contenant autoportant (29) comprenant au moins une fenêtre d'inspection (32, 33) formant une ouverture traversante ; et/ou
- au moins l'une des parois (29) de contenant autoportant comprenant au moins deux fenêtres ; et/ou
- ladite au moins une fenêtre d'inspection (32, 33) étant placée près du bord supérieur de la paroi (34) ; et/ou
- ladite au moins une fenêtre d'inspection (32, 33) étant placée près d'un bord inférieur de la paroi (35) près du fond (27) de contenant autoportant ; et/ou
- ladite au moins une fenêtre (32, 33) étant placée à 200-300 mm du bord (34, 35) de la paroi (29) de contenant autoportant ; et/ou
- ladite paroi (29) de contenant autoportant comprenant une fenêtre supérieure (32) et une fenêtre inférieure (33) ; et/ou
- ladite fenêtre supérieure (32) étant utilisée pour tester l'étanchéité de la poche imperméable (4) contenant le café en surpression ; et/ou
- ladite fenêtre inférieure (33) étant utilisée pour insérer une sonde à aiguille dans le sac de protection et de transport (15) et dans la poche imperméable (4) et tester les gaz à l'intérieur de la poche imperméable (4) ; et/ou
- ledit ensemble emballage (1) comprenant au moins une palette de transport (36) sur laquelle repose le contenant autoportant (24) ; et/ou
- ledit ensemble emballage (1) comprenant des sangles ou des attaches de blocage (37) qui encerclent ledit contenant autoportant (24), le fermant ; et/ou
- lesdites sangles (37) de palette encerclant également ladite palette de transport (36), rendant l'ensemble (1) intégral et le stabilisant ; et/ou
- ledit ensemble emballage (1) comprenant au moins un film étirable (38) enroulé autour du contenant autoportant (24) pour le protéger, l'imperméabiliser et le stabiliser ; et/ou
- ledit au moins un film étirable (38) étant également enroulé autour de la palette de transport (36) pour supporter et stabiliser l'ensemble (1) ; et/ou
- ladite paroi (29) de contenant autoportant comprenant une fenêtre supérieure (32) et une fenêtre inférieure (33) ; et/ou
- ladite fenêtre supérieure (32) étant utilisée pour tester le joint de la poche imperméable (4) contenant le café sous vide ; et/ou
- ladite fenêtre supérieure (32) étant utilisée pour tester l'étanchéité de la poche imperméable (4) contenant le café en surpression ; et/ou
- ladite fenêtre inférieure (33) étant utilisée pour insérer une sonde à aiguille dans le sac de protection et de transport (15) et dans la poche imperméable (4) et tester les gaz à l'intérieur de la poche imperméable (4) ; et/ou
- ledit ensemble emballage (1) comprenant au moins une palette de transport (36) sur laquelle repose la poche de protection et de transport (15) dans laquelle est insérée ladite au moins une poche imperméable (4) dans laquelle est placé du café moulu et torréfié (3) ; et/ou
- ledit ensemble emballage (1) comprenant des bandes de cerclage, ou de blocage, (37) qui encerclent ladite poche de protection et de transport (15), la fermant ; et/ou
- ledit ensemble emballage (1) comprenant au moins un film étirable (38) enroulé autour de ladite poche de protection et de transport (15) pour la protéger, l'imperméabiliser et la stabiliser.

8. Procédé d'emballage de grains de café torréfiés (3) comprenant les étapes consistant à :
- fournir les grains de café torréfiés (3) ;
- gonfler de l'air dans une poche imperméable flexible (4) hermétiquement fermée ;
- verser les grains de café (3) dans une poche imperméable flexible (4) hermétiquement fermée ;
- verser dans ladite poche imperméable (4) une quantité de café torréfié d'au moins 100 kg ;
- fermer hermétiquement ladite poche imperméable (4) ;
- empêcher du gaz ou des fluides d'entrer dans la poche imperméable (4) ;
- ajuster la pression à l'intérieur de la poche imperméable (4) de telle sorte qu'elle se situe entre 3 et 60 mbar par rapport à la pression externe ;
- insérer la poche imperméable (4) dans un sac de protection et de transport (15) comprenant une paroi tubulaire (17) de sac de protection et de transport, ainsi qu'un fond (18) de sac de protection et de transport avec une ouverture d'évacuation ou déchargement (19) de sac de protection et de transport pouvant être fermée et une partie de chargement (20) de sac de protection et de transport délimitant une ouverture de chargement (21) de sac de protection et de transport pouvant être fermée, pouvant être mécaniquement fermée,
- ledit au moins un sac de protection et de transport (15) étant flexible ; et
- ledit sac de protection et de transport (15) comprenant des boucles ou poignées (16) appropriées pour manipuler l'ensemble (1).

9. Procédé selon la revendication 8, comprenant les étapes supplémentaires consistant à :
- verser dans ladite poche imperméable (4) une quantité de café torréfié occupant un volume minimum d'au moins 500 litres ; et/ou
- verser dans ladite poche imperméable (4) une quantité de café torréfié occupant un volume variant de 1 100 à 1 600 litres ; et/ou
- verser dans ladite poche imperméable (4) une quantité de café torréfié variant de 350 kg à 450 kg ; et/ou
- remplir la poche imperméable (4) avec des grains de café torréfiés (3) jusqu'à 60-80 % du volume intérieur (6) de poche imperméable ; et/ou
- ajuster la pression à l'intérieur de la poche imperméable (4) de telle sorte qu'elle se situe entre 10 et 40 mbar par rapport à la pression externe ou pression atmosphérique ; et/ou
- ajuster la pression à l'intérieur de la poche imperméable (4) de telle sorte qu'elle se situe entre 10 et 60 mbar par rapport à la pression externe ou pression atmosphérique ; et/ou
- ajuster la pression à l'intérieur de la poche imperméable (4) de telle sorte qu'elle se situe entre 20 et 60 mbar par rapport à la pression externe ou pression atmosphérique ; et/ou
- ajuster la pression à l'intérieur de la poche imperméable (4) de telle sorte qu'elle se situe entre 3 et 9 mbar par rapport à la pression externe ou pression atmosphérique ; et/ou
- avant la fermeture hermétique de la poche imperméable (4), introduire de l'azote N2 dans la poche imperméable (4) de manière à amener la quantité d'oxygène à l'intérieur de la poche imperméable (4) à moins de 6 % du volume total à l'intérieur de la poche hermétiquement fermée, de préférence à moins de 5 % ; et/ou
- introduire dans la poche imperméable (4) de l'azote N2 pour une quantité d'au moins 1,3 fois plus que le volume de la poche imperméable (6) ; et/ou
- rincer les grains de café torréfiés (3) présents dans la poche imperméable (4) avec 2 mètres cubes d'azote dans un volume total (6) de poche de 1500 litres rempli jusqu'à 60-80 % en volume de grains torréfiés ; et/ou
- empêcher du gaz ou des fluides d'entrer dans la poche imperméable (4) en créant une barrière à l'oxygène qui présente une perméabilité à l'oxygène inférieure à 0,1 centimètre cube/m²/24 h à 23 °C et 0 % de RH (humidité relative) ; et/ou
- empêcher du gaz ou des fluides d'entrer dans la poche imperméable (4) en créant une barrière à la vapeur d'eau qui présente une perméabilité à la vapeur d'eau de moins de 0,1 g/m²/24 h à 38 °C et 90 % de RH ; et/ou
- avant l'insertion de la poche imperméable (4), attacher et fermer le fond de sac de protection et de transport (15) ; et/ou
- attacher et fermer, en les reliant, la partie embouchure (10) de poche imperméable et la partie de chargement (20) de sac de protection et de transport ; et/ou
- insérer le sac de protection et de transport (15) dans un contenant autoportant (24) ; par exemple du type octabin ; et/ou
- vérifier à travers ladite au moins une fenêtre (32) du contenant autoportant (24) que la poche imperméable (4) est sous pression après qu'elle a été remplie de café et hermétiquement fermée ; et/ou
- vérifier à travers ladite au moins une fenêtre (33) du contenant autoportant (24) que l'oxygène dans la poche imperméable (4) est inférieur à 6 % en volume de la poche imperméable (4) lors de l'acheminement de l'ensemble à destination ; et/ou
- vérifier à travers l'au moins une fenêtre (33) du contenant autoportant (24) que l'oxygène dans la poche imperméable (4) est inférieur à 5 % en volume de la poche imperméable (4) lors de l'acheminement de l'ensemble à destination.

10. Procédé selon au moins l'une des revendications 8 ou 9, comprenant les étapes successives suivantes :
1) créer à partir de la découpe le fond (27) de contenant autoportant et des parois (29) de contenant autoportant sur une palette de transport (36) ;
2) fermer le sac de protection et de transport (24) fermant le fond (18) de sac de protection et de transport à l'aide d'un noeud (22) ;
3) insérer le sac de protection et de transport (15) à l'intérieur du contenant autoportant (24) ;
4) attacher les poignées (16) du sac de protection et de transport (15) à des crochets (42) d'une structure de support (41) de sac de protection et de transport plaçant l'ouverture de chargement (21) de sac de protection et de transport sous la trémie de remplissage de café (43) ;
5) insérer la poche imperméable (4) à l'intérieur du sac de protection et de transport (15) positionnant ce dernier d'une manière telle que les coins de la poche imperméable (4) soient alignés sur les coins du sac de protection et de transport (15) ;
6) lier l'ouverture de chargement ou l'embouchure (11) de poche imperméable (11) à la trémie de remplissage (43) ;
7) souffler de l'air dans la poche imperméable (4) pour permettre son gonflage et rendre disponible le plus grand volume de remplissage (6) possible ;
8) remplir la poche imperméable (4) de café torréfié (3) ;
9) détacher l'embouchure de chargement (11) de poche imperméable de la trémie de remplissage (43) et procéder au thermosoudage des deux côtés de l'embouchure de chargement (11) de poche imperméable, laissant un espace d'insertion pour la buse de rinçage (45) permettant l'insertion de la buse de rinçage (39) et l'envoi d'azote gazeux dans le volume intérieur (6) de poche imperméable ;
10) thermosceller l'espace (45) de telle sorte que la poche imperméable (4) soit hermétique ;
11) plier l'embouchure de chargement (11) de poche imperméable et son attache avec un noeud courant au sac de protection et de transport (15) ;
12) insérer le couvercle (26) de contenant autoportant fermant le contenant autoportant (24) ou éviter d'insérer le couvercle (26) de contenant autoportant ;
et/ou comprenant au moins l'une des étapes suivantes :
- mettre en place autour du contenant autoportant des sangles ou bandes de blocage (37) et fermer hermétiquement l'ensemble (1) en l'enveloppant d'un film étirable (38) pour protéger et stabiliser le contenant autoportant (24) placé sur la palette (36) ;
et/ou comprenant au moins l'une des activités suivantes :
- vérifier le gonflage de surpression de la poche imperméable (4) après un temps prédéfinie à partir du déversement de grains de café (3) et fermer hermétiquement ; et/ou réaliser une telle vérification à travers la fenêtre supérieure (32) ; et/ou une telle vérification étant réalisée après un temps prédéfini variant de 2 h à 36 h ; et/ou comprenant l'activité suivante
- vérifier à l'aide d'une sonde à aiguille, par exemple d'un instrument de vérification de compositions gazeuses dans un environnement, l'oxygène présent dans le volume intérieur (6) de la poche imperméable (4) ; par exemple passer à travers d'une fenêtre d'inspection (33) et percer le film étirable (38), le sac de protection et de transport (15) et la poche imperméable (4) en surpression ; et/ou la fournir l'activité suivante :
- décharger/évacuer les grains torréfiés (3) en ouvrant le contenant autoportant (24), soulever le sac de protection et de transport (15) à l'aide des poignées (16), défaire le noeud dans le fond (18) de sac de protection et de transport et découper la partie fond (9) de poche imperméable.
